(19)

Europäisches Patentamt
European Patent Office
Office européen des brevets

(11) **EP 3 792 038 A1**

(12) **EUROPEAN PATENT APPLICATION**

(43) Date of publication:
**17.03.2021 Bulletin 2021/11**

(21) Application number: **20204743.7**

(22) Date of filing: **31.03.2017**

(51) Int Cl.:
*B29C 63/02* (2006.01)   *B65B 53/02* (2006.01)
*G09F 3/04* (2006.01)   *B29C 63/40* (2006.01)
*B29C 63/42* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.03.2016 JP 2016071716**

(62) Document number(s) of the earlier application(s) in accordance with Art. 76 EPC:
**17775615.2 / 3 438 011**

(71) Applicant: **Fuji Seal International, Inc.**
**Osaka-shi, Osaka 532-0003 (JP)**

(72) Inventors:
• **MATSUNAGA, Gosuke**
**Osaka-shi, Osaka 532-0003 (JP)**

• **MIYAZAKI, Akira**
**Osaka-shi, Osaka 532-0003 (JP)**
• **YOSHIDA, Nao**
**Osaka-shi, Osaka 532-0003 (JP)**
• **ETANI, Yukitoshi**
**Osaka-shi, Osaka 532-0003 (JP)**

(74) Representative: **Arnold & Siedsma**
**Bezuidenhoutseweg 57**
**2594 AC The Hague (NL)**

Remarks:
This application was filed on 29-10-2020 as a divisional application to the application mentioned under INID code 62.

(54) **PRODUCTION PROCESS FOR PACKAGE**

(57) A method for producing a package (10) comprising:
- preparing a label (17) that includes a label base (47) and a heat-sensitive adhesive layer (37) provided on a back surface of the label base (47), and that contains an ultraviolet-absorbing heating agent in at least either one of the heat-sensitive adhesive layer and a region of the label base, in which at least the heat-sensitive adhesive layer (37) is provided,
- applying the label (11) onto an adherend; and
- activating the heat-sensitive adhesive layer (37) through ultraviolet irradiation,
wherein preparing of a label (17) further comprises:

- providing an elongated strip-shaped film web forming the label base (47);
- partitioning the elongated strip-shaped film web into a plurality of labels (17) in the longitudinal direction by disconnecting a web of the label base (47) in the thickness direction;
and wherein activating the heat-sensitive adhesive layer (37) comprises:
- irradiating the ultraviolet-absorbing heating agent for generating heat and transferring the heat to the heat-sensitive adhesive layer (37), thereby adhering the heat-sensitive layer (37) to the adherend.

【Fig.17】

EP 3 792 038 A1

**Description**

TECHNICAL FIELD

The present invention relates to a production process for a package in which a label is applied on an adherend such as a container.

BACKGROUND ART

Conventionally, packages having various types of label applied on adherends such as containers have been known.

The label is made of a label base on which a design is printed, and is, for example, adhered to an adherend through an adhesive agent. A heat-sensitive adhesive agent is used as such an adhesive agent. The heat-sensitive adhesive agent develops adhesive force when heated. When a label containing such a heat-sensitive adhesive agent is heated, the heat-sensitive adhesive agent is activated and adhered to an adherend.

Labels containing the heat-sensitive adhesive agent can be distinguished depending on a heat-shrinking property. A label made of a heat-shrinkable label base and a label made of a non-heat-shrinkable label base have been known.

Labels containing the heat-sensitive adhesive agent can be classified depending on a form before applied onto an adherend. Typically, a label formed in a sheet shape and a label formed in a tubular shape have been known.

In the present specification, a label made of a heat-shrinkable label base and containing a heat-sensitive adhesive agent is collectively referred to as a "shrinkable adhesion label", and a label made of a non-heat-shrinkable label base and containing a heat-sensitive adhesive agent is collectively referred to as a "non-shrinkable adhesion label" in some cases. A shrinkable adhesion label formed in a sheet shape is referred to as a "heat-shrinkable sheet label", and a shrinkable adhesion label formed in a tubular shape is referred to as a "heat-shrinkable tubular label". In addition, a non-shrinkable adhesion label formed in a sheet shape is referred to as a "non-heat-shrinkable sheet label". The heat-shrinkable sheet label and the non-heat-shrinkable sheet label are also called a heat activation label or a hot melt label, and also called a heat-sensitive label particularly in Japan. The heat-shrinkable tubular label is also called a heat-shrinkable tubular label, a shrink tube, a shrink label, or a shrink sleeve.

A shrinkable adhesion label and a non-shrinkable adhesion label can be adhered and applied onto an adherend because the heat-sensitive adhesive agent therein is activated by heating.

In particular, in shrinkable adhesion labels including a heat-shrinkable tubular label and a heat-shrinkable sheet label, the label base is thermally shrunk by heating, and the heat-sensitive adhesive agent is activated by heating as well. The shrinkable adhesion label is thermally shrunk by heating, and thus can be applied substantially along the outer surface of an adherend in various stereoscopic shapes such as a three-dimensional curved surface. Such a label can be used to provide a package having preferable appearance.

Conventionally, steam or heated air has been used as heating means for heating the heat-sensitive adhesive agent in the shrinkable adhesion label and the non-shrinkable adhesion label.

However, heating devices such as a steam generation device and a heated air generation device are relatively large-sized facilities with high installation costs. In addition, such a heating device has low energy efficiency because the energy of steam or heated air is released into air (atmosphere). Thus, when steam or heated air is used, running cost is high, but the heat-sensitive adhesive agent cannot be sufficiently activated in some cases.

In addition, a heat-shrinkable tubular label has problems as follows.

For example, Patent Literature 1 discloses a heat-shrinkable tubular label having a heat-sensitive adhesive agent applied at an opening end part of a label base in a circumferential direction. And the heat-sensitive adhesive agent on either surface is applied at a shifted position in a cylindrical axial direction so that the heat-sensitive adhesive agent on one surface and the heat-sensitive adhesive agent on the other surface do not face each other when the label base is folded in a flat shape.

After applied onto a container, this heat-shrinkable tubular label is heated by using steam or heated air so that the heat-shrinkable tubular label is thermally shrunk in the circumferential direction to come into close contact with an adherend, and simultaneously, the heat-sensitive adhesive agent is activated and adheres to the adherend.

Specifically, the steam or heated air reaches the outer surface of the heat-shrinkable tubular label applied onto the adherend and increases the temperature of the label base. The heat-sensitive adhesive agent is activated when heat of the label base whose temperature is increased acts on the heat-sensitive adhesive agent. That is, the heat-sensitive adhesive agent is heated by the steam or heated air through the label base. However, since the energy efficiency is low when steam or heated air is used as described above, there is no thermal energy sufficient to heat the heat-sensitive adhesive agent through the label base to a relatively high temperature. For this reason, a heat-sensitive adhesive agent that is activated at a relatively low temperature (for example, approximately 60°C) is used for a heat-shrinkable tubular label.

However, when a heat-sensitive adhesive agent that activates at a relatively low temperature (for example, approximately 60°C) is used, a problem called blocking is likely to occur. Patent Literature 1 solves this problem by disposing the heat-sensitive adhesive agents so that the heat-sensitive adhesive agent on one surface and the heat-sensitive adhesive agent on the other surface do not face each other.

CITATIONS LIST

PATENT LITERATURE

Patent Literature 1: JP 2002-068150 A

SUMMARY OF INVENTION

A method disclosed in Patent Literature 1 is effective, but in this method, disposition of the heat-sensitive adhesive agent is restricted, and the heat-sensitive adhesive agent cannot be disposed at a desired position. For example, when the heat-sensitive adhesive agent is alternately arranged as disclosed in Patent Literature 1, the heat-shrinkable tubular label does not adhere to a container at a place having no heat-sensitive adhesive agent, and thus, the applied heat-shrinkable tubular label may deform at this non-adhered part due to a shrinkage difference between the non-adhered part and an adhered part. The deformation is, for example, slight undulation of the label, and generation of creases on the label.

Since the energy efficiency is low when steam or heated air is used as described above, a heat-sensitive adhesive agent that activates at a relatively low temperature is typically used in a heat-shrinkable sheet label as well.

TECHNICAL PROBLEMS

A first object of the present invention is to provide a process of producing a package having a label adhered to an adherend through a heat-sensitive adhesive layer by sufficiently activating the heat-sensitive adhesive layer by an inexpensive method.

A second object of the present invention is to provide a process of producing a package having a label applied onto an adherend so that deformation or the like does not occur near a heat-sensitive adhesive layer.

SOLUTIONS TO PROBLEMS

A production process for a package according to the present disclosure is defined a appended claim 1. The process may include: a preparation step of preparing a label that includes a label base and a heat-sensitive adhesive layer provided on a back surface of the label base and in which an ultraviolet-absorbing heating agent is contained in at least either one of the heat-sensitive adhesive layer and a region of the label base, which includes at least the heat-sensitive adhesive layer; an application step of applying the label onto an adherend; and a step of activating the heat-sensitive adhesive layer through ultraviolet irradiation.

The method may further comprise:

- laminating a release film, the heat-sensitive adhesive layer comprising the heat-sensitive adhesive, and the label base material in this order by melting the release film and the label base material and interposing the heat-sensitive adhesive between them;
- sectioning the label base material into a plurality of labels by cutting the label base material in the thickness direction;
- removing unnecessary portions of the label base material except the plurality of labels from the mold release film and obtaining a continuous body with the plurality of labels attached to the mold release film at predetermined intervals;
- feeding the continuum longitudinally and stripping the label from the release film release surface.
- providing a laminated body (8) comprising a release film, a heat-sensitive adhesive layer made of the heat-sensitive adhesive agent and an elongated strip-shaped film web of label base material;
- partitioning the laminated body into a plurality of labels in the longitudinal direction by disconnecting a web of the label base in the thickness direction.

Optionally the providing of the laminated body comprises:

- interposing a melted heat-sensitive adhesive agent between an elongated strip-shaped release film and the elongated strip-shaped film web.

In embodiments of the present disclosure the elongated strip-shaped film web is formed by a non-heat shrinkable base layer and/or the elongated strip-shaped film web is formed by a heat shrinkable base layer.

The method may further comprise:

- feeding the laminated body in the longitudinal direction to a peeling unit;
- peeling the release film of the laminated body (8) at the peeling unit off from a release surface of the release film.

Optionally the method comprises irradiating the label when it has been peeled off from the release film.

In the production process for a package according to the present invention, it is preferable that the label prepared through the preparation step is a heat-shrinkable tubular label including a tubular body obtained by forming a heat-shrinkable label base in a tubular shape and the heat-sensitive adhesive layer provided on an inner surface of the tubular body.

In the production process for a package according to the present invention, it is preferable that the heat-sensitive adhesive layer is entirely provided in a region extending in an annular band shape on the inner surface of the tubular body.

In the production process for a package according to the present invention, it is preferable that the ultraviolet-absorbing heating agent is contained across the entire surface of the tubular body.

In the production process for a package according to the present invention, it is preferable that the heat-sensitive adhesive layer has an activation temperature equal to or higher than 70°C.

In the production process for a package according to the present invention, it is preferable that the ultraviolet light has a peak wavelength of 200 nm to 399 nm.

In the production process for a package according to the present invention, it is preferable that the ultraviolet light has an irradiation intensity equal to or higher than 780 mW/cm$^2$.

In the production process for a package according to the present invention, it is preferable that the ultraviolet-absorbing heating agent is contained in the heat-sensitive adhesive layer.

ADVANTAGEOUS EFFECTS OF INVENTION

A production process according to the present invention can relatively inexpensively produce a package having a label is sufficiently adhered to an adherend through a heat-sensitive adhesive layer.

A preferable production process according to the present invention can prevent a heat-shrinkable tubular label from causing blocking, and further, can apply the heat-shrinkable tubular label to an adherend through heat shrinking without causing deformation or the like near a heat-sensitive adhesive layer, and produce a package having favorable appearance.

BRIEF DESCRIPTION OF DRAWINGS

FIG. 1 is a perspective view of a heat-shrinkable tubular label according to a first embodiment.

FIG. 2 is an enlarged top view of the heat-shrinkable tubular label viewed from above.

FIG. 3 is a perspective view of a label base constituting the heat-shrinkable tubular label viewed from a back surface side thereof.

FIG. 4 is a cross-sectional view taken along line IV-IV in FIG. 3.

FIG. 5 is a cross-sectional view taken along line V-V in FIG. 3.

FIG. 6 is a front view including a right-half section illustrating a state in which the heat-shrinkable tubular label is applied onto an adherend.

FIG. 7 is a front view including a right-half section of a package obtained by applying the heat-shrinkable tubular label to the adherend.

FIG. 8 is a cross-sectional view of a label base according to a modification of the first embodiment (cross-sectional view of the label base according to the modification taken along line V-V in FIG. 3).

FIG. 9 is an enlarged top view of a heat-shrinkable tubular label viewed from above according to a first modification of the first embodiment.

FIG. 10 is a perspective view of a label base constituting the heat-shrinkable tubular label viewed from the back surface side thereof.

FIG. 11 is a cross-sectional view taken along line XI-XI in FIG. 10.

FIG. 12 is a cross-sectional view taken along line XII-XII in FIG. 10.

FIG. 13 is a perspective view of a label base constituting a heat-shrinkable tubular label viewed from the back surface side thereof according to a second modification of the first embodiment.

FIG. 14 is a cross-sectional view taken along line XIV-XIV in FIG. 13.

FIG. 15 is a perspective view of a heat-shrinkable tubular label according to a fourth modification of the first embodiment.

FIG. 16 is a plan view of a continuous body including a plurality of non-heat-shrinkable sheet labels viewed from a front surface side thereof according to a second embodiment.

FIG. 17 is a side view of the continuous body.

FIG. 18 is an enlarged cross-sectional view taken along line XVIII-XVIII in FIG. 16.

FIG. 19 is an enlarged cross-sectional view taken along line XIX-XIX in FIG. 16.

FIG. 20 is a plan view of a continuous body including a plurality of non-heat-shrinkable sheet labels in two rows viewed from the front surface side thereof.

FIG. 21 is a schematic diagram schematically illustrating each step in the process of producing a continuous body having an adhesive label is attached to a release film.

FIG. 22 is a perspective view illustrating a state in which the adhesive label is taken out of the continuous body.

FIG. 23 is a front view of a package obtained by applying a non-heat-shrinkable sheet label to an adherend.

FIG. 24 is a plan view of a heat-shrinkable sheet label viewed from the front surface side thereof.

FIG. 25 is a cross-sectional view taken along line XXV-XXV in FIG. 24.

FIG. 26 is a reference cross-sectional view illustrating a procedure of applying a heat-shrinkable sheet label onto an adherend.

FIG. 27 is a right-side view of a package on which the heat-shrinkable sheet label is applied.

DESCRIPTION OF EMBODIMENTS

The present invention will be described below with reference to the accompanying drawings.

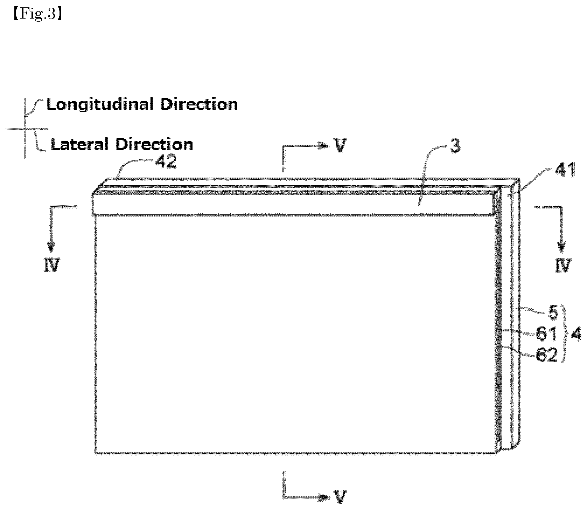

In this description, a front surface refers to one surface of a label base, and a back surface refers to a surface on the other side of the front surface. When the label base is formed in a tubular shape, the front surface of the label base is the outer surface of the label base when the label base formed in a tubular shape, and the back surface of the label base is the inner surface of the label base when the label base is formed in a tubular shape. A lateral direction refers to one direction in the plane of the label base, and a longitudinal direction refers to a direction orthogonal to the lateral direction in the plane. In FIG. 3, the lateral direction is defined to be the right-left direction of a sheet. "First" and "second" are placed in front of terms in some cases, but such words are added only to distinguish the terms, and have no special meaning such as an inferior-to-superior relation. A numerical value range expressed with "to" means a numerical value range including the numerical values before and after "to" as a lower limit value and an upper limit value. When a plurality of lower limit values and a plurality of upper limit values are separately written, a range may be defined by an optional lower limit value and an optional upper limit value selected and connected with each other with "to".

For example, a dimension such as the thickness of each component in the drawings, and a ratio between components are different from those in reality.

**First embodiment**

A first embodiment and modifications thereof each relate to a production process using a heat-shrinkable tubular label made of a heat-shrinkable label base.

<Outlines of heat-shrinkable tubular label, label base, and heat-sensitive adhesive layer used in the present embodiment>

In the first embodiment, a heat-shrinkable tubular label is used. The heat-shrinkable tubular label includes a heat-shrinkable label base and a heat-sensitive adhesive layer provided on the inner surface of the label base. An ultraviolet-absorbing heating agent is contained in at least either one of the heat-sensitive adhesive layer and a region of the label base, which includes at least the heat-sensitive adhesive layer.

As described above, a shrinkable adhesion label can be roughly classified into a heat-shrinkable sheet label and a heat-shrinkable tubular label in terms of its form. The following describes the heat-shrinkable tubular label in detail.

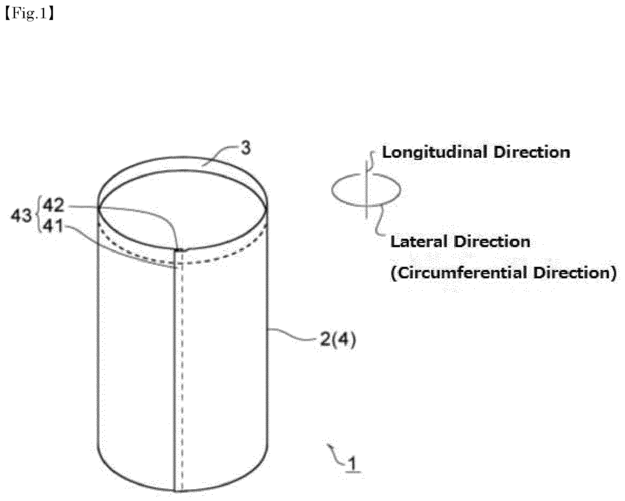

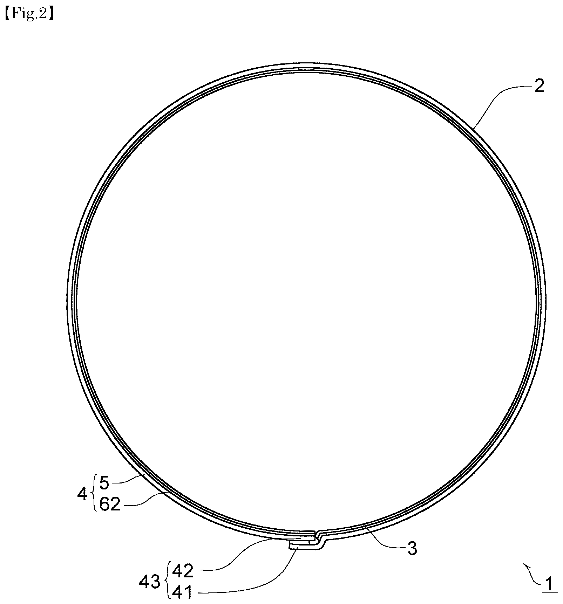

As illustrated in FIGS. 1 and 2, a heat-shrinkable tubular label 1 used in a production process according to the present embodiment includes a tubular body 2 that is shrinkable by heat at least in the circumferential direction, and a heat-sensitive adhesive layer 3 provided on at least part of the inner surface of the tubular body 2.

The tubular body 2 is obtained by forming a heat-shrinkable label base 4 in a tubular shape and bonding end parts 41 and 42 on both sides.

An ultraviolet-absorbing heating agent is contained in at least either one of the heat-sensitive adhesive layer 3 and a region of the tubular body 2, which includes at least the heat-sensitive adhesive layer 3. In other words, (a) the ultraviolet-absorbing heating agent is contained in the heat-sensitive adhesive layer 3, (b) the ultraviolet-absorbing heating agent is contained in a region of the tubular body 2, which includes at least the heat-sensitive adhesive layer 3, or (c) the ultraviolet-absorbing heating agent is contained in both of the heat-sensitive adhesive layer 3 and the region including at least the heat-sensitive adhesive layer 3.

When the ultraviolet-absorbing heating agent is contained in the region of the tubular body 2 including at least the heat-sensitive adhesive layer 3, (A) the ultraviolet-absorbing heating agent is contained only in the region of the tubular body 2 including the heat-sensitive adhesive layer 3, (B) the ultraviolet-absorbing heating agent is contained in part of the tubular body 2, which includes the heat-sensitive adhesive layer 3, or (C) the ultraviolet-absorbing heating agent is contained across the entire tubular body 2.

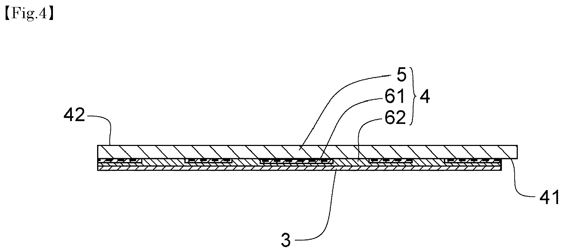

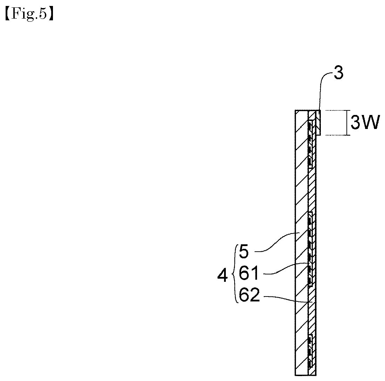

FIG. 3 illustrates the label base viewed from the back surface side thereof in a perspective view to facilitate understanding of a laminated structure of layers constituting the label base. FIGS. 4 and 5 are cross-sectional views of the label base.

As illustrated in FIGS. 3 to 5, the label base 4 includes a heat-shrinkable film 5 and optional print layers 61, 62 and the heat-sensitive adhesive layer 3 is provided in part of the back surface of the label base 4. In this description, a "film" is synonymous with what is typically called "sheet".

Each print layer is a layer obtained by applying and solidifying well-known ink by a well-known printing method such as a gravure printing method. The print layer is a thin layer having a thickness of approximately 0.5 μm to 10 μm. The print layer itself does not have mechanical strength like a heat-shrinkable film, and is different from a film. The print layer can be functionally classified into, for example, a design print layer, a base print layer, a slipping layer, and a protective layer. At least one print layer selected from among these print layers is provided to the heat-shrinkable film.

The following describes the heat-shrinkable film, each print layer and heat-sensitive adhesive layers first, and then describes the label base and the like in detail.

<Heat shrinkable film>

The heat-shrinkable film is such a film that is shrinkable by heat and flexible.

In this description, "heat-shrinkable" expresses the property of shrinkage at least in the main stretching direction at heating to a heat-shrink temperature (for example, 60°C to 200°C).

In terms of a thermal property, the heat-shrinkable film is shrinkable by heat mainly in at least the lateral direction (main stretching direction), and may be slightly shrinkable by heat or expandable by heat in the longitudinal direction. When the label base is formed in a tubular shape (in other words, when the heat-shrinkable tubular label is formed by using the label base), the lateral direction of the heat-shrinkable film corresponds to the circumferential direction of the heat-shrinkable tubular label. The heat-shrinkable film may be a uniaxially or biaxially stretched film that is expanded mainly in the lateral direction.

The heat-shrinkable film may or may not have a self stretch property as long as the film has the heat shrinkage property. The self stretch property is such a property of expansion with film being pulled, and the of shrinkage to the substantially original length with the pulling force released.

The heat-shrinkage rate of the heat-shrinkable film in the lateral direction (main stretching direction) is not particularly limited, but is preferably equal to or higher than 40%, more preferably equal to or higher than 50%, and still more preferably equal to or higher than 60%. The heat shrinkage rate in the lateral direction is preferably as high as possible. However, since heat-shrinking naturally has limit, the heat shrinkage rate in the lateral direction is lower than 100% in theory, and normally equal to or lower than 90%. When the heat-shrinkable film is a film that changes by heat in the longitudinal direction, the heat shrinkage rate in the longitudinal direction is, for example, -3 to 20%, and preferably 1 to 10%. The negative sign in the heat shrinkage rate means expansion by heat.

In this description, the heat shrinkage rate is a ratio between the length (original length) of the film before heating and the length (length after immersion) of the film after immersion in hot water of 100°C for 10 seconds, and is calculated by substituting into the equation below.

$$\text{Heat shrinkage rate } (\%) = [\{(\text{Original length in the lateral direction or the longitudinal direction}) - (\text{Length after immersion in the lateral direction or the longitudinal direction})\}/(\text{Original length in the lateral direction or the longitudinal direction})] \times 100.$$

In an optical viewpoint, the heat-shrinkable film may be transparent or opaque.

In this description, "transparent" describes a state in which, when a white sheet on which an optional number (in the size of 12 point) is printed with black ink is disposed at a place away from the back surface by 1 cm on the back surface side of a film or a layer (for example, a print layer or a heat-sensitive adhesive layer), the number can be determined through the film or the layer from the front surface side. The term "transparent" may refer to colorless transparent or colored transparent.

In this description, "opaque" describes a state in which a number disposed on the back surface side under the above-described condition cannot be determined from the front surface side through the film or the layer (state in which the number cannot be recognized).

The index of transparency (colorless transparent or colored transparent) can be expressed by using, for example, a whole light transmissivity. As the index of transparency, for example, the whole light transmissivity is equal to or higher than 70%, preferably equal to or higher than 80%, and more preferably equal to or higher than 90%. The whole light transmissivity is a value obtained by measuring a transparent measurement target by a measurement method compliant with JIS K 7361 (test method for the whole light transmissivity of plastic-transparent material). In case that the transparent measurement target is transparent heat-shrinkable film, it is the film itself. While, in case that the measurement target is transparent layer, it is the transparent heat-shrinkable film provided with the transparent layer.

When expressed in the whole light transmissivity, the index of opaqueness is, for example, equal to or lower than 30%, and preferably equal to or lower than 20%.

The heat-shrinkable film is not particularly limited, but may be, for example, a synthesis resin film or a foamed resin film. The foamed resin film is not limited to a film foamed by a foaming agent or the like, but also includes a film in which numerous air bubbles are generated by stretching. The synthesis resin film is preferably used since a transparent heat-shrinkable film can be obtained.

As described later, a heat-shrinkable film that transmits ultraviolet light for heating an ultraviolet-absorbing heating agent is used when a layer containing the ultraviolet-absorbing heating agent is provided on the heat-shrinkable film.

Examples of the material of the heat-shrinkable film include one kind selected from among thermoplastic resins such as polyester based resins such as polyethylene terephthalate and polylactic acid; olefin based resins such as polyethylene, polypropylene, and cyclic olefin; polystyrene based resins such as polystyrene and styrene-butadiene copolymer; a polyamide based resin; and a vinyl-chloride based resin, and a mixture of two or more kinds selected from among the thermoplastic resins.

In view of a structure in the thickness direction, the heat-shrinkable film may be a single-layer film or a laminated film obtained by laminating and bonding resin layers of two or more kinds.

The thickness of the heat-shrinkable film is not particularly limited, but is, for example, 20 $\mu$m to 100 $\mu$m for a synthesis resin film, and is, for example, 50 $\mu$m to 500 $\mu$m for a foamed resin film.

<Design print layer>

The design print layer is provided mainly for decoration. The design print layer is a print layer on which, for example, desired characters and figures are displayed in a single color or in two or more colors. In the design print layer, normally, display of characters and the like is formed in color ink, and typically, opaque and transparent parts are mixed. The design print layer can be formed through single color printing or multicolor printing with conventionally well-known color ink by a conventionally well-known printing method such as a gravure printing method. The thickness of the design print layer is, for example, 0.1 $\mu$m to 5 $\mu$m.

<Base print layer>

For one purpose, the base print layer is provided to emphasize display of the design print layer. For another purpose, the base print layer is provided to add a light-shielding property to the tubular body.

The base print layer is a non-patterned opaque print layer colored in a single color or in two or more colors, and is preferably a non-patterned single-color opaque print layer.

The base print layer shows an optional color such as white, gray, silver, black, or red. The base print layer is preferably a non-patterned opaque print layer showing one color selected from white, gray, and black.

The base print layer showing white can be formed ,for example, by printing white ink containing white pigment in a solid state by a conventionally well-known printing method. Examples of the white pigment include titanium dioxide, zinc oxide, calcium carbonate, clay, and alumina white.

The base print layer showing gray can be formed by printing gray ink containing gray pigment in a solid state by a conventionally well-known printing method. Examples of the gray pigment include pigment obtained by appropriately mixing white pigment with black pigment such as carbon black or silver pigment such as powder aluminum.

The base print layer showing silver can be formed by printing silver ink containing silver pigment in a solid state by a conventionally well-known printing method. Examples of the silver pigment include powder aluminum and vapor deposited aluminum.

The base print layer showing black can be formed by printing black ink containing black pigment such as carbon black in a solid state by a conventionally well-known printing method.

The contained amount of pigment is set as appropriate for each pigment. For example, for white pigment, the contained amount is 30 wt% to 80 wt% based on 100 wt% of the entire white base print layer.

In this description, the "solid state" of a layer corresponds to a state in which the material constituting the layer extends in a plane direction, forming one continuous layer. However, a layer formed by a plate printing method such as a gravure printing method is made of a collection of material adhered in dots. Thus, when macroscopically viewed, the material extends in the plane direction, thus forming one continuous layer. However, when microscopically viewed, numerous minute gaps exist in the plane in some cases. Thus, the solid state also includes a state in which one continuous layer is macroscopically formed even when minute gaps microscopically exist.

The thickness of the base print layer is, for example, 0.5 $\mu$m to 5 $\mu$m.

<Slipping layer>

The slipping layer is provided to reduce friction between a heat-shrinkable tubular label and an adherend. The heat-shrinkable tubular label including the slipping layer can be excellently applied onto the adherend.

Normally, the slipping layer is provided as the innermost surface of the tubular body. The slipping layer may be transparent or opaque, but is preferably transparent.

The slipping layer can be formed ,for example, by printing ink (so-called medium ink) including a slipping component such as lubricant and substantially not including colorant in a solid state by a conventionally well-known printing method. The description "substantially not including colorant" means that mixture of a small amount of colorant inevitably included is allowed but mixture of a significant amount of colorant is not allowed.

The slipping component such as lubricant is not particularly limited, but is, for example, polyolefin wax or silicone oil.

The contained amount of the slipping component is also not particularly limited, but is, for example, 1 wt% to 20 wt% based on 100 wt% of the entire slipping layer.

The slipping layer does not necessarily need to be transparent, but may be opaque.

The thickness of the slipping layer is, for example, 0.1 $\mu$m to 3 $\mu$m.

<Protective layer>

The protective layer is provided mainly to protect the front surface of the heat-shrinkable film. The protective layer is preferably transparent, and more preferably colorless transparent.

As described later, when the design print layer is provided on the front surface side of the heat-shrinkable film, the protective layer is provided on the front surface of the design print layer. In addition, the protective layer may be provided as necessary to protect the front or back surface of any layer other than the design print layer.

The protective layer can be formed by printing ink (so-called medium ink) substantially not including colorant in a solid state by a conventionally well-known printing method.

The protective layer may include a slipping component such as lubricant as necessary. Specific examples and amounts of the lubricant are same as described above for the slipping layer.

The thickness of the protective layer is, for example, 0.5 $\mu$m to 5 $\mu$m.

<Heat-sensitive adhesive layer>

The heat-sensitive adhesive layer is an adhesive layer provided to bond the heat-shrinkable tubular label to an adherend. The heat-sensitive adhesive layer is provided in a desired range of the back surface of the label base. Normally, the heat-sensitive adhesive layer is provided in a solid state in the desired range, but may be provided in mesh or in numerous dots in the range (not illustrated).

The heat-sensitive adhesive layer may be transparent or opaque, but is normally colorless transparent.

The heat-sensitive adhesive layer is provided by printing or coating a heat-sensitive adhesive agent on the back surface of the label base.

In the present invention, the heat-sensitive adhesive agent has no adhesive force at room temperature (23°C) but activates to develop adhesive force when heated. In the present invention, the adhesive agent is a concept including what is called bonding agent.

The heat-sensitive adhesive agent is not particularly limited as long as the adhesive agent does not have adhesive properties at room temperature but can be adhered to an adherend when heated.

Examples of kinds of the heat-sensitive adhesive agent include a delayed tack type heat-sensitive adhesive agent, an emulsion type heat-sensitive adhesive agent containing no solid plasticizer (hereinafter simply referred to as "emulsion type heat-sensitive adhesive agent"), a solvent type heat-sensitive adhesive agent, and a hot-melt type adhesive agent.

The delayed tack type heat-sensitive adhesive agent has no adhesive force at room temperature, activates to develop adhesive force when heated, and maintains the adhesive force for a long time after being cooled. Coating of the delayed tack type heat-sensitive adhesive agent can be performed by printing such as gravure coating. Examples of the delayed tack type heat-sensitive adhesive agent include an emulsion type adhesive agent obtained by adding tackifier and solid plasticizer to base resin such as ethylene-vinyl acetate copolymer, vinyl acetate-acrylic acid ester copolymer, or synthetic rubber.

The emulsion type heat-sensitive adhesive agent and the solvent type heat-sensitive adhesive agent have no adhesive force at room temperature, but develop adhesive force when heated. The emulsion type heat-sensitive adhesive agent and the solvent type heat-sensitive adhesive agent are, for example, adhesive agents having solution obtained by dissolving or dispersing heat-adhesive resin such as ethylene-vinyl acetate copolymer and, tackifier or the like in water or organic solvent or the like, which can be used for coating by printing such as gravure coating. The emulsion type heat-sensitive adhesive agent and the solvent type heat-sensitive adhesive agent are dried after coating, and used.

The hot-melt type adhesive agent has no adhesive force at room temperature, but develops adhesive force when heated. The hot-melt type adhesive agent can be melted by heating and used to provide coating by, for example, a hot-melt coater or an extrusion laminator. Examples of the hot-melt type adhesive agent include a mixture obtained by adding additive such as tackifier to ethylene based resin such as ethylene-vinyl acetate copolymer or ethylene acrylic acid copolymer, or base resin such as styrene-butadiene block copolymer.

The activation temperature of the heat-sensitive adhesive agent (heat-sensitive adhesive layer) is not particularly limited. For example, the heat-sensitive adhesive agent having an activation temperature equal to or higher than 30°C and lower than 70°C may be used.

When heating is performed by using an ultraviolet-absorbing heating agent as the present invention, the heat-sensitive adhesive layer having a relatively high activation temperature can be easily activated, and the heat-shrinkable tubular label including the heat-sensitive adhesive layer having a relatively high activation temperature is unlikely to cause blocking. Thus, the activation temperature of the heat-sensitive adhesive agent (heat-sensitive adhesive layer) used for the heat-shrinkable tubular label is preferably equal to or higher than 70°C, more preferably equal to or higher than 80°C, and still more preferably equal to or higher than 90°C. Heating with the ultraviolet-absorbing heating agent may be insufficient when the activation temperature of the heat-sensitive adhesive agent (heat-sensitive adhesive layer) is too high. Thus, the activation temperature of the heat-sensitive adhesive agent (heat-sensitive adhesive layer) is preferably equal to or lower than 150°C, and more preferably equal to or lower than 120°C.

In this description, the activation temperature of the heat-sensitive adhesive agent (heat-sensitive adhesive layer) is a temperature at which the heat-sensitive adhesive layer generates adhesion strength equal to or higher than 0.7 N/15mm. The heat-sensitive adhesive agent (heat-sensitive adhesive layer) according to the present invention does not have a clear melting point, and the activation temperature of the heat-sensitive adhesive agent is the softening temperature of the heat-sensitive adhesive agent, and a temperature at which adhesion strength equal to or higher than 0.7 N/15mm is generated.

The adhesion strength of the heat-sensitive adhesive layer is obtained by measuring the adhesion strength of a test piece (having a length of 10 mm in the peeling direction and a length of 15 mm in the width direction) of a film provided with the heat-sensitive adhesive layer. In the measurement, the heat-sensitive adhesive layer is heated at a desired temperature, and then the test piece is adhered to a flat plate made of polyethylene terephthalate through the heat-sensitive adhesive layer under a pressure of 0.1 MPa, and a T-type peeling test (peeling speed 300 mm/min) is performed by a method compliant with JIS K 6854-3. A temperature (in other words, the activation temperature) at which the adhesion strength of the test piece is equal to or higher than 0.7 N/15mm can be measured by measuring the adhesion strength of the test piece while gradually raising the heating temperature.

The heat-sensitive adhesive agent having a relatively high activation temperature that is, for example, equal to or higher than 70°C may be a commercially available product. Examples of such a commercially available product include "CPH 380-N" manufactured by Sanyo Trading Co., Ltd., and "Toyoparax A70" manufactured by Tosoh Corporation.

The thickness of the heat-sensitive adhesive layer is not particularly limited, but is normally approximately 3 $\mu$m to 30 $\mu$m.

<Step of preparing heat-shrinkable tubular label>

As illustrated in FIGS. 1 and 2, the heat-shrinkable tubular label 1 includes the tubular body 2 obtained by forming the label base 4 in a tubular shape, and the heat-sensitive adhesive layer 3 provided on the inner surface of the tubular body 2.

As illustrated in FIGS. 3 to 5, the label base 4 according to the present embodiment includes the heat-shrinkable film 5, the design print layer 61, and a slipping layer 62. Details of these components are described above in <Heat-shrinkable film>, <Design print layer>, and <Slipping layer>.

The design print layer 61 is provided on the back surface side of the heat-shrinkable film 5 to prevent damage. However, the design print layer 61 may be provided on the front surface side of the heat-shrinkable film 5 (not illustrated). In the illustrated example, the design print layer 61 is directly provided on the back surface of the heat-shrinkable film 5. When the design print layer 61 is provided on the back surface side, the heat-shrinkable film 5 that is transparent (preferably, colorless transparent) is used. While, when the design print layer 61 is provided on the front surface side, the heat-shrinkable film 5 that is transparent or opaque may be used.

When the design print layer 61 is provided on the back surface side, the design print layer 61 is provided entirely or partially on the remaining portion of the back surface of the heat-shrinkable film 5 excluding a first side end part 41. When the design print layer 61 is provided on the front surface side, the design print layer 61 is provided entirely or partially on the remaining portion of the front surface of the heat-shrinkable film 5 excluding a second side end part 42. The first side end part 41 and the second side end part 42 extend in the longitudinal direction and face each other in the lateral direction.

In the illustrated example, the design print layer 61 is provided at places in a range excluding the first side end part 41 and both end parts facing each other in the longitudinal direction. The range in which the design print layer 61 is provided is set in accordance with design as appropriate. Specifically, in the present embodiment, the design print layer 61 is provided at places on the back surface of the heat-shrinkable film 5 excluding the first side end part 41 and both end parts facing each other in the longitudinal direction. When the range is compared to sea, the design print layer 61 is scattered as islands in the sea.

The slipping layer 62 is provided on the back surface side of the heat-shrinkable film 5.

The slipping layer 62 is entirely provided on the remaining portion of the heat-shrinkable film 5 excluding the first side end part 41.

When the design print layer 61 is provided at places as in the illustrated example, the slipping layer 62 is provided across the back surface of the heat-shrinkable film 5 and the back surface of the design print layer 61. Thus, when the label base 4 is viewed from the back surface side, the back surface of the heat-shrinkable film 5 is exposed at the first side end part 41, and the slipping layer 62 is exposed at a place other than the first side end part 41. After the heat-sensitive adhesive layer 3 to be described later is provided on the back surface of the slipping layer 62, the back surface of the slipping layer 62 is exposed except for a part where the adhesive layer 3 is provided.

The lateral length of the exposed part on the back surface of the heat-shrinkable film 5 at the first side end part 41 is not particularly limited, but is, for example, 2 mm to 10 mm to form a favorable sealing part.

The slipping layer 62 may be transparent or opaque, but is preferably transparent. When the transparent slipping layer 62 is used, a part where the design print layer 61 is not provided (part between the design print layer 61 dispersively provided at places) is transparent, and thus the heat-shrinkable tubular label 1 is achieved in transparent tone.

The heat-sensitive adhesive layer 3 is provided on the back surface of the label base 4 having a layer configuration of the heat-shrinkable film 5, the design print layer 61, and the slipping layer 62.

The heat-sensitive adhesive layer 3 is provided at part of the back surface of the label base 4.

For example, the heat-sensitive adhesive layer 3 is provided at part of the back surface of the slipping layer 62 serving as the backmost surface of the label base 4. The heat-sensitive adhesive layer 3 is preferably provided in a region extending in a strip shape in the lateral direction in the remaining portion of the label base 4 excluding the first side end part 41, and more preferably provided in a region extending in a strip shape in the lateral direction at an end part in the longitudinal direction in the remaining portion.

A width 3W of the heat-sensitive adhesive layer 3 provided in a strip shape (the width 3W is the longitudinal length of the heat-sensitive adhesive layer 3) is not particularly limited, but when it is too small, the width 3W leads to reduction of an adhesion area for an adherend. For this reason, the width 3W of the heat-sensitive adhesive layer 3 is preferably equal to or larger than 3 mm, and more preferably equal to or larger than 5 mm. While, when the width 3W of the heat-sensitive adhesive layer 3 is too large, the heat-sensitive adhesive layer 3 dominates a large part of the inner surface of the heat-shrinkable tubular label 1, which makes it difficult to apply the heat-shrinkable tubular label 1 onto an adherend. For this reason, the width 3W of the heat-sensitive adhesive layer 3 is preferably equal to or smaller than one-third of the longitudinal length of the label base 4 (heat-shrinkable tubular label 1), and more preferably equal to or smaller than one-fourth of the longitudinal length. In specific numerical values, the width 3W of the heat-sensitive adhesive layer 3 is preferably equal to or smaller than 30 mm, and more preferably equal to or smaller than 20 mm

An ultraviolet-absorbing heating agent is contained in at least either one of the label base 4 and the heat-sensitive adhesive layer 3.

In the present invention, the ultraviolet-absorbing heating agent is a material having a function (heat generation function) of converting ultraviolet light into thermal energy and increasing the temperature of surroundings with the thermal energy.

Examples of the ultraviolet-absorbing heating agent include organic materials such as a benzophenone based compound, a salicylate based compound, a cyanoacrylate based compound, a benzoate based compound, a benzotriazole based compound, and a triazine based compound; and inorganic materials such as titanium dioxide, zinc oxide, and carbon black. These ultraviolet-absorbing heating agents may be used alone or in mixture of two or more kinds thereof.

For example, the ultraviolet-absorbing heating agent is contained across the entire surface of the label base 4 or the entire surface thereof except for the first side end part 41. The heat-shrinkable tubular label 1 formed by using the label base 4 containing the ultraviolet-absorbing heating agent in this manner can be shrunk by heat through ultraviolet irradiation.

The description "the ultraviolet-absorbing heating agent is contained across the entire surface of the label base 4" refers to a state in which the ultraviolet-absorbing heating agent exists across the entire surface of the label base 4 when the label base 4 is transparently viewed in a direction orthogonal to the back surface of the label base 4. The description "the ultraviolet-absorbing heating agent is contained across the entire surface of the label base 4 except for the first side end part 41" refers to a state in which the ultraviolet-absorbing heating agent exists across the entire surface of the label base 4 except for the first side end part 41 when the label base 4 is transparently viewed in the direction orthogonal to the back surface of the label base 4.

Thus, the ultraviolet-absorbing heating agent may be contained in all of the film 5 and the print layer 61, 62 constituting the label base 4, or may be contained in at least one thereof.

Hereinafter, a layer or film containing the ultraviolet-absorbing heating agent is referred to as a "heat generation part" in some cases.

In the label base 4 as illustrated in FIGS. 3 to 5, cases in which the ultraviolet-absorbing heating agent is contained across the entire surface of the label base 4 include a case in which the ultraviolet-absorbing heating agent is contained in the heat-shrinkable film 5.

In the label base 4 as illustrated in FIGS. 3 to 5, cases in which the ultraviolet-absorbing heating agent is contained across the entire surface of the label base 4 except for the first side end part 41 include a case in which the ultraviolet-absorbing heating agent is contained in the slipping layer 62.

The heat generation part is preferably a part directly in contact with the heat-sensitive adhesive layer 3. In the illustrated example, the ultraviolet-absorbing heating agent is contained in the slipping layer 62 directly in contact with the heat-sensitive adhesive layer 3.

The amount of the ultraviolet-absorbing heating agent is not particularly limited. Larger amount of heat is generated as larger amount of the ultraviolet-absorbing heating agent is contained. However, when the amount of the ultraviolet-absorbing heating agent is too large, the amount of any other component is relatively reduced so that the functionalities of the film and the print layer such as the slipping layer 62 may not be maintained.

For this reason, the amount of the ultraviolet-absorbing heating agent in the slipping layer 62 is 1 wt% to 20 wt%, and preferably 2 wt% to 10 wt%, based on 100 wt% of the entire slipping layer 62.

When the ultraviolet-absorbing heating agent is contained in the heat-shrinkable film 5, the amount thereof is 2 wt% to 40 wt%, and preferably 5 wt% to 30 wt%, based on 100 wt% of the entire film 5.

When the ultraviolet-absorbing heating agent is contained in the heat-sensitive adhesive layer 3, the amount thereof is 2 wt% to 10 wt%, and preferably 3 wt% to 8 wt%, based on 100 wt% of the entire heat-sensitive adhesive layer 3.

The label base 4 according to the present embodiment can be obtained by forming each print layer on the heat-shrinkable film 5 by a conventionally well-known printing method. The label base 4 with a heat-sensitive adhesive layer can be obtained by forming the heat-sensitive adhesive layer 3 on the back surface of the label base 4 by a conventionally well-known printing method or the like.

The heat-shrinkable tubular label 1 illustrated in FIGS. 1 and 2 is obtained by forming the label base 4 provided with the heat-sensitive adhesive layer 3 in a tubular shape, placing the back surface of the first side end part 41 over the front surface of the second side end part 42, and adhering the site where the parts are overlapped.

The method of adhering the back surface of the first side end part 41 and the front surface of the second side end part 42 is, for example, welding using solvent or adhesion using an adhesive agent. The site where the parts are overlapped and adhered together is a sealing part 43.

Normally, as illustrated in FIG. 1, the heat-shrinkable tubular label 1 is opened in a tubular shape when applied onto an adherend. However, when the heat-shrinkable tubular label 1 is produced, it is folded in a flat shape as in conventional cases (not illustrated).

In an actual production step, typically, a plurality of the heat-shrinkable tubular labels 1 are continuously connected with each other as an elongated strip-shaped continuous body and provided while being folded in a flat shape. Then, the continuous body is disconnected as appropriate to obtain the individual heat-shrinkable tubular labels 1, and each heat-shrinkable tubular label 1 is opened in a tubular shape immediately before being applied onto an adherend.

The present invention is not limited to the case in which the heat-shrinkable tubular labels are continuously connected with each other and provided as a continuous body, but the label bases in sheet shapes may be continuously connected with each other and provided as a base continuous body. When the sheet label bases are continuously connected with each other and provided as a base continuous body, one label base is cut out of the base continuous body immediately before being applied onto an adherend. Then, the label base is formed in a tubular shape by being wound around a jig such as a mandrel, and accordingly, a heat-shrinkable tubular label is formed. Thereafter, the heat-shrinkable tubular label is applied onto an adherend.

The heat-shrinkable tubular label 1 is made of the tubular body 2 obtained by forming the heat-shrinkable label base 4 into a tubular shape, and the heat-sensitive adhesive layer 3 provided on the inner surface of the tubular body 2.

As illustrated in FIG. 2, when the label base 4 is formed in a tubular shape, both side edges of the slipping layer 62 are in contact with each other near the sealing part 43, and the back surface of the slipping layer 62 is in a tubular shape on the innermost surface of the tubular body 2. However, when the first side end part 41 and the second side end part 42 of the label base 4 are adhered to each other, a negligibly small gap (for example, approximately several mm) is formed between both side edges of the slipping layer 62 near the sealing part 43 in some cases. When such a small gap exists, it is regarded that the slipping layer 62 has a tubular shape.

In the present embodiment, since the ultraviolet-absorbing heating agent is contained at least in the entire slipping layer 62, the ultraviolet-absorbing heating agent is contained across the entire surface of the tubular body 2. The description "the ultraviolet-absorbing heating agent is contained across the entire surface of the tubular body 2" refers to a state in which the ultraviolet-absorbing heating agent exists when the tubular body 2 is transparently viewed from any position in the circumferential direction of the tubular body 2. As described above, when a small gap is formed between both side edges of the slipping layer 62, it is regarded that the ultraviolet-absorbing heating agent is contained across the entire surface of the tubular body 2.

In addition, both side edges of the heat-sensitive adhesive layer 3 are in contact with or in close contact with each other, and thus, the heat-sensitive adhesive layer 3 has an annular band shape at an end part of the inner surface of the tubular body 2 in the longitudinal direction. In other words, the heat-sensitive adhesive layer 3 is provided entirely in a region extending in an annular band shape at an end part of the inner surface of the tubular body 2 (in the illustrated example, the back surface of the slipping layer 62) in the longitudinal direction. The annular band shape is a shape having a desired width (however, this width is shorter than the longitudinal length of the tubular body 2) in the longitudinal direction, which is continuous in the circumferential direction.

However, even when a negligibly small gap (for example, approximately several mm) is formed between both side edges of the heat-sensitive adhesive layer 3 near the sealing part 43, it is regarded that the heat-sensitive adhesive layer 3 has an annular band shape.

<Step of applying heat-shrinkable tubular label>

The heat-shrinkable tubular label 1 is applied onto an optional adherend by heat-shrinking.

The adherend is not particularly limited. Typical examples of the adherend include various containers such as a beverage container of coffee or the like, a seasoning container, a food container of instant noodle or the like, a sanitary container of shampoo or the like, a detergent container, a cosmetic container, and a medical container; and an item itself such as a machine part.

The material of an outer surface part of the adherend is not particularly limited, but is, for example, synthesis resin, glass, metal, or ceramic.

The type of the adherend is not particularly limited. For example, when the adherend is a container, examples of the adherend include a bottle-shaped container having a cap part and a body part, a cup-shaped container, and a bowl-shaped container.

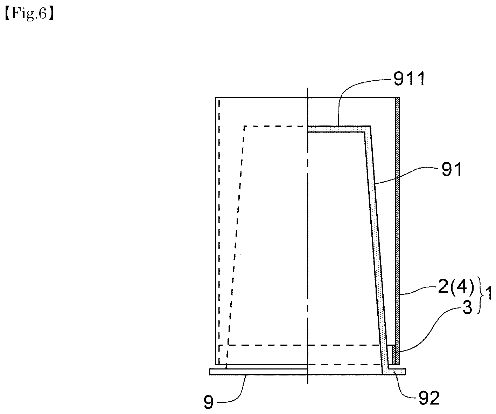

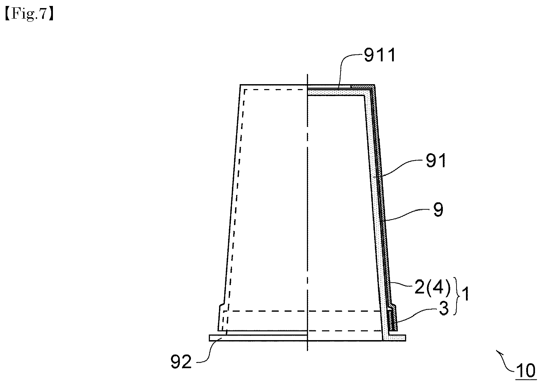

FIGS. 6 and 7 illustrate an example showing the heat-shrinkable tubular label 1 is applied onto a cup-shaped container 9.

The cup-shaped container 9 includes a body part 91 having an opening at an upper surface, and a flange part 92 extended outward in the radial direction from an upper end part of the body part 91. The cup-shaped container 9 can stand by itself on a horizontal plane with a bottom part 911 of the body part 91 being placed at bottom. The body part 91 may have a straight body shape or a non-straight body shape. The body part 91 is a site onto which the heat-shrinkable tubular label 1 is applied. The straight body shape is a shape that does not change in circumferential length in the axial direction of the container 9. The body part 91 in the illustrated example has a non-straight body shape, and for example, has a taper shape having a smaller circumferential length at a lower position. Such a cup-shaped container 9 houses a beverage and food therein, and the opening of the body part 91 is blocked by a lid (not illustrated). However, the cup-shaped container 9 may be used alone without blockage by the lid.

When the container 9 is provided with the flange part 92, it is easy to apply the heat-shrinkable tubular label 1 thereon while the flange part 92 is placed at the bottom as illustrated in FIG. 6. Thus, FIG. 6 illustrates the cup-shaped container 9 upside down.

The body part 91 may have a shape including a three-dimensional curved surface.

The heat-shrinkable tubular label 1 is opened in a tubular shape and applied onto the body part 91 of the cup-shaped container 9. The heat-shrinkable tubular label 1 is applied onto the body part 91 so that the end part thereof in the longitudinal direction, at which the heat-sensitive adhesive layer 3 is provided is positioned near the flange part 92.

Subsequently, heating is performed to shrink the heat-shrinkable tubular label 1 by the heat and activate the heat-sensitive adhesive layer 3, achieving adhesion to the body part 91 of the container 9.

Ultraviolet irradiation is used as the heating means. Steam or heated air, which has been conventionally used, may be used in addition to the ultraviolet irradiation as necessary.

In the present embodiment, since the ultraviolet-absorbing heating agent is contained across the entire surface of the tubular body 2, only ultraviolet irradiation can be used to shrink the heat-shrinkable tubular label 1 by heat and activate the heat-sensitive adhesive layer 3.

Specifically, the entire surrounding of the heat-shrinkable tubular label 1 is irradiated with ultraviolet light from outside of the heat-shrinkable tubular label 1 applied onto the container 9 by using an ultraviolet irradiation device (not illustrated).

The ultraviolet irradiation device is not limited to a particular light source, but may include, for example, an ultraviolet LED, an ultraviolet lamp (with electrodes or without electrodes), or an ultraviolet laser. The ultraviolet irradiation device may be a commercially available product, and is, for example, "FE300" manufactured by Phoseon Technology.

The peak wavelength of ultraviolet is, for example, 150 nm to 500 nm, preferably 200 nm to 400 nm, more preferably 200 nm to 399 nm, still more preferably 300 nm to 399 nm, and most preferably 350 nm to 399 nm. When ultraviolet light having such a wavelength is used, heat can be generated at the heat generation part by the ultraviolet light without influence on the color of the design print layer.

The irradiation intensity (UV illuminance) of ultraviolet light is not particularly limited, but when the irradiation intensity is too low, the ultraviolet-absorbing heating agent does not sufficiently generate heat in a short time. Thus, the irradiation intensity is preferably equal to or higher than 780 mW/cm$^2$, and more preferably equal to or higher than 2000 mW/cm$^2$. The upper limit of the irradiation intensity of ultraviolet is not limited, but is, for example, equal to or lower than 15 W/cm$^2$.

An ultraviolet irradiation time continues at least until a purpose is achieved. Specifically, the ultraviolet irradiation time continues at least until or after the heat-sensitive adhesive layer 3 is activated and adhered to the container 9, and preferably until or after the heat-shrinkable tubular label 1 is shrunk by heat to be in close contact with the container 9 and the heat-sensitive adhesive layer 3 is activated and adhered to the container 9.

Specifically, a cumulative light quantity of ultraviolet light is preferably equal to or larger than 400 mJ/cm$^2$, and more preferably equal to or larger than 800 mJ/cm$^2$. However, too much ultraviolet irradiation may melt the label base 4, and thus the upper limit of the cumulative light quantity is preferably, for example, equal to or smaller than 8100 mJ/cm$^2$. The cumulative light quantity can be calculated by "the ultraviolet irradiation intensity $\times$ the irradiation time.

Through the ultraviolet irradiation, the heat generation part (slipping layer 62 containing the ultraviolet-absorbing heating agent) generates heat. When the heat is transferred to the heat-shrinkable film 5 and the heat-sensitive adhesive layer 3, the heat-shrinkable film 5 (that is, the heat-shrinkable tubular label 1) is shrunk by heat, and substantially simultaneously, the heat-sensitive adhesive layer 3 is activated and adhered to the container 9.

In this manner, as illustrated in FIG. 7, a package 10 is obtained which has the heat-shrinkable tubular label 1 is adhered to the container 9 at the heat-sensitive adhesive layer 3 and is in close contact with the container 9 at the other part.

However, when the container 9 includes a recess such as a partially recessed outer surface, the heat-shrinkable tubular label 1 does not closely contact with the recess in some cases, depending on the shape of the container 9.

In a process according to the present invention, since the heat-sensitive adhesive layer is activated by using ultraviolet light, a relatively small-sized device (typically, the ultraviolet irradiation device is small-sized as compared to a steam generation device and a heated air generation device) can be used. Thus, the process according to the present invention is excellent in terms of facility and running cost, and can be relatively inexpensively achieved. When steam or hot air is used, heat is applied on any part other than the heat-sensitive adhesive layer. However, when ultraviolet light is used, only the heat-sensitive adhesive layer and the vicinity thereof can be heated. For example, in a case of an adherend (for example, a container housing a beverage or the like) to which heat is not preferably applied, it is difficult to heat only the heat-shrinkable tubular label by using steam or heated air. However, according to the present invention, for example, even when an adherend is entirely irradiated with ultraviolet light, the heat-sensitive adhesive layer can be heated without applying heat to the adherend.

In addition, since heat is generated at the ultraviolet-absorbing heating agent by using ultraviolet light, thermal energy can be sufficiently supplied to the heat-sensitive adhesive layer 3, activating the heat-sensitive adhesive layer 3. Thus, the heat-sensitive adhesive layer 3 can be sufficiently activated and adhered to the adherend not only when a heat-sensitive adhesive agent that activates at a relatively low temperature is used, but also when a heat-sensitive adhesive agent that activates at a relatively high temperature equal to or higher than 70°C is used.

When such a heat-sensitive adhesive agent at a relatively high temperature is used, the heat-sensitive adhesive layer 3 provided in an annular band shape in the circumferential direction of the tubular body 2 as illustrated in FIG. 1 is unlikely to cause blocking. In addition, blocking is unlikely to occur when the heat-sensitive adhesive layer 3 has a flat shape as disclosed in Patent Literature 1 and the heat-sensitive adhesive layers 3 are disposed so that the heat-sensitive adhesive layer 3 on one surface and the heat-sensitive adhesive layer 3 on the other surface do not face each other, or when the heat-sensitive adhesive layer 3 is disposed in a strip shape extending the longitudinal direction of the tubular body 2. That is, when the heat-sensitive adhesive agent at a relatively high temperature is used, blocking is unlikely to occur, and thus the heat-sensitive adhesive layer 3 can be disposed at a desired position.

Conventionally, a heat-sensitive adhesive agent at a relatively low temperature has been used to sufficiently activate the heat-sensitive adhesive layer, and disposition of the heat-sensitive adhesive layer has been restricted to prevent blocking. However, in the process according to the present invention, the heat-sensitive adhesive layer of the heat-shrinkable tubular label can be sufficiently activated, and blocking can be prevented when the heat-sensitive adhesive layer is provided at an optional position.

Since the heat-sensitive adhesive layer 3 is provided in an annular band shape at the end part in the longitudinal direction of the tubular body 2, the package 10 having the end part of the heat-shrinkable tubular label 1 is adhered to the container 9 entirely in the circumferential direction can be obtained. The package 10 has favorable appearance because the end part of the heat-shrinkable tubular label 1 is applied without deformation near the heat-sensitive adhesive layer 3.

When the ultraviolet-absorbing heating agent is contained across the entire surface of the tubular body 2 as in the present embodiment, the heat-shrinkable tubular label 1 can be shrunk by heat through ultraviolet irradiation. Thus, only one heating means is required to perform application of the heat-shrinkable tubular label 1 onto the container 9 through heat-shrinking and adhesion of the heat-sensitive adhesive layer 3.

For example, in the heat-shrinkable tubular label 1 according to the first embodiment, the ultraviolet-absorbing heating agent may be contained in the design print layer 61 instead of the heat-shrinkable film 5 and the slipping layer 62.

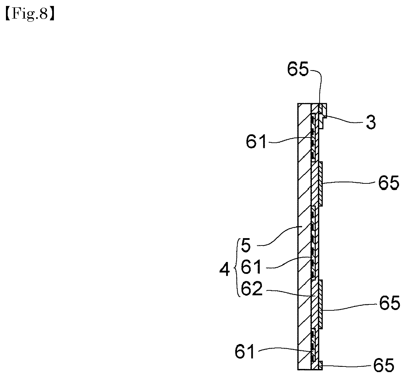

In this case, as illustrated in FIG. 8, a partial print layer 65 containing the ultraviolet-absorbing heating agent is preferably provided at a part where the design print layer 61 is not provided. In the label base 4, the design print layer 61 containing the ultraviolet-absorbing heating agent and the partial print layer 65 containing the ultraviolet-absorbing heating agent complement each other so that the ultraviolet-absorbing heating agent exists across the entire surface of the label base 4 (except for the first side end part 41).

The present invention is not limited to the first embodiment, but may be modified in various manners within the intended range of the present invention. The following describes modifications of the first embodiment and a second embodiment. The description will be mainly made on configurations and effects different from those of the first embodiment. Description of, for example, any configuration identical to that of the first embodiment will be omitted in some cases while the same terms and reference signs are used for the configuration.

**First modification of first embodiment**

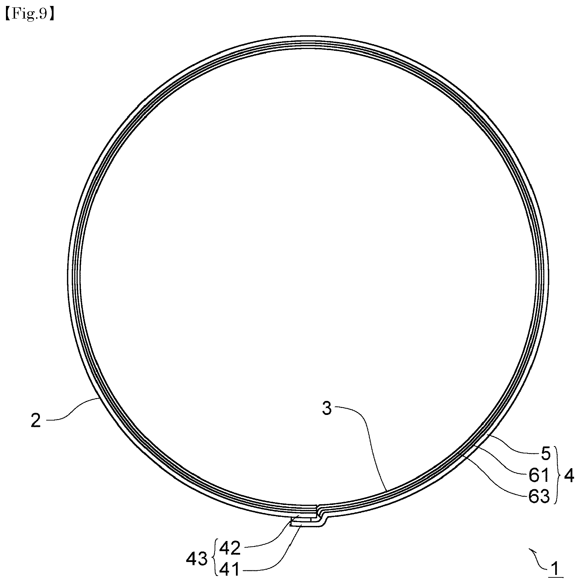

The heat-shrinkable tubular label 1 according to a first modification of the first embodiment is different from that of the first embodiment mainly in that a base print layer 63 is provided on the back surface side of the design print layer 61 as illustrated in FIG. 9.

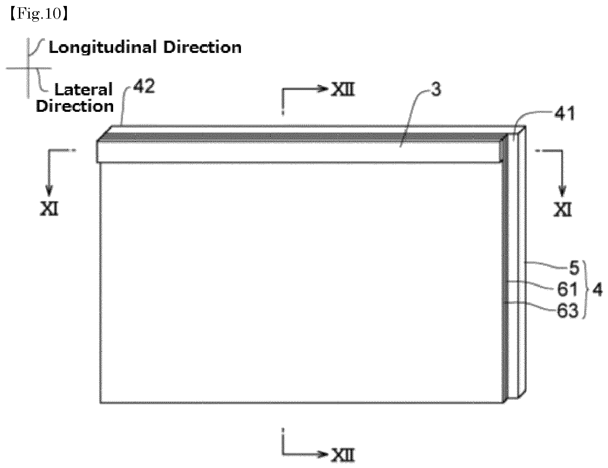

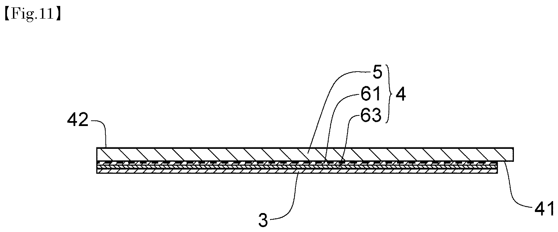

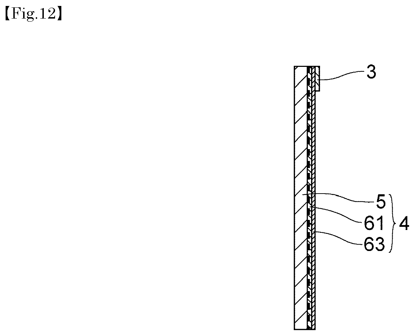

Specifically, as illustrated in FIGS. 10 to 12, the label base 4 constituting the heat-shrinkable tubular label 1 according to the first modification includes the heat-shrinkable film 5, the design print layer 61, and the base print layer 63. Details of these components are described above in <Heat-shrinkable film>, <Design print layer>, and <Base print layer>.

The design print layer 61 is provided on the back surface side of the heat-shrinkable film 5 to prevent damage. The design print layer 61 is entirely provided on the remaining portion of the back surface of the heat-shrinkable film 5 excluding the first side end part 41.

The base print layer 63 is provided on the back surface of the design print layer 61. When the base print layer 63 is provided on the back surface of the design print layer 61, for example, the design print layer 61 is entirely opaque, and accordingly, the heat-shrinkable tubular label 1 is achieved in opaque tone. The base print layer 63 may be a single layer or may include two layers or more. However, in the illustrated example, for the sake of simplicity, the base print layer 63 is illustrated as a single layer. The base print layer 63 is, for example, a white print layer, a gray print layer, or a black print layer. The base print layer 63 preferably includes a white print layer. When the base print layer 63 is desired to have a light-shielding property, the base print layer preferably has a laminated structure of two or more layers including a gray print layer or a black print layer. For example, the base print layer has (a) a laminated structure including at least two layers of a white print layer and a black print layer sequentially from the front surface side, (b) a laminated structure including at least two layers of a white print layer and a gray print layer sequentially from the front surface side, (c) a laminated structure including at least three layers of a white print layer / a black print layer / a white print layer sequentially from the front surface side, or (d) a laminated structure including at least three layers of a white print layer / a gray print layer / and a white print layer sequentially from the front surface side. When the base print layer includes a white print layer on the front surface side and a black print layer or/and a gray print layer on the back surface side, a label design improvement effect by the white print layer, and a label light-shielding effect by the black print layer or/and the gray print layer can be achieved.

The heat-sensitive adhesive layer 3 is provided on the back surface side of the base print layer 63.

As described in the first embodiment, the design print layer 61 may be provided on the front surface side of the heat-shrinkable film 5 (not illustrated). In this case, the base print layer 63 is provided on the back surface of the design print layer 61 (between the design print layer 61 and the heat-shrinkable film 5). Alternatively, the base print layer 63 is provided on the back surface of the transparent heat-shrinkable film 5 (preferably, the colorless transparent heat-shrinkable film 5). Since the heat-sensitive adhesive layer 3 is preferably provided directly in contact with the base print layer 63 as the heat generation part, the base print layer 63 is provided on the back surface of the transparent heat-shrinkable film 5 when the design print layer 61 is provided on the front surface side of the heat-shrinkable film 5.

Also in the first modification, the ultraviolet-absorbing heating agent is contained in at least either one of the label base 4 and the heat-sensitive adhesive layer 3.

The ultraviolet-absorbing heating agent is preferably contained in the base print layer 63 directly in contact with the heat-sensitive adhesive layer 3.

When the base print layer 63 contains pigment (preferably, titanium dioxide or carbon black is used as the pigment) that functions as an ultraviolet-absorbing heating agent, the base print layer 63 functions as the heat generation part without another ultraviolet-absorbing heating agent. However, the base print layer 63 may contain another ultraviolet-absorbing heating agent.

When the ultraviolet-absorbing heating agent is titanium dioxide, the amount of titanium dioxide in the base print layer 63 is 40 wt% to 80 wt%, and preferably 50 wt% to 75 wt%, based on 100 wt% of the entire print layer.

Similarly to the first embodiment, the label base 4 provided with the heat-sensitive adhesive layer 3 is formed in a tubular shape to produce the tubular body 2, and accordingly, the heat-shrinkable tubular label 1 is achieved.

The heat-shrinkable tubular label 1 according to the first modification includes the tubular body 2 obtained by forming the heat-shrinkable label base 4 in a tubular shape and the heat-sensitive adhesive layer 3 provided on the inner surface of the tubular body 2. In the heat-shrinkable tubular label 1, the back surface of the base print layer 63 has a tubular shape on the innermost surface of the tubular body 2, and the heat-sensitive adhesive layer 3 in contact with the base print layer 63 has an annular band shape.

Similarly to the first embodiment, the heat-shrinkable tubular label 1 according to the first modification is applied onto an adherend and irradiated with ultraviolet light to generate heat at the heat generation part (base print layer 63). Due to the heat, the heat-shrinkable tubular label 1 is shrunk by heat, and substantially simultaneously, the heat-sensitive adhesive layer 3 is activated and adhered to the container 9, and accordingly, the package 10 is achieved.

In the heat-shrinkable tubular label 1 according to the first modification, the back surface of the base print layer 63 serves as the innermost surface of the tubular body 2. Alternatively, a slipping layer may be provided on the back surface of the base print layer 63 so that the back surface of the slipping layer serves as the innermost surface of the tubular body 2 (not illustrated). In this case, the slipping layer is interposed between the heat-sensitive adhesive layer 3 and the base print layer 63. However, the thickness of the slipping layer is extremely small, and thus heat generation at the base print layer 63 as the heat generation part is sufficiently transferred to the heat-sensitive adhesive layer 3, and the heat-sensitive adhesive layer 3 is sufficiently activated. In this example, the ultraviolet-absorbing heating agent may be contained in the slipping layer, similarly to the first embodiment.

**Second modification of first embodiment**

The first embodiment and the first modification thereof mainly describe the use of the heat-shrinkable tubular label 1 having the ultraviolet-absorbing heating agent is contained across the entire surface of the tubular body 2 (the entire surface of the label base 4 except for the first side end part 41). The following mainly describes (A) a case in which the ultraviolet-absorbing heating agent is contained only in a region of the tubular body 2 having the heat-sensitive adhesive layer 3 provided, or (B) a case in which the ultraviolet-absorbing heating agent is contained only in the heat-sensitive adhesive layer 3.

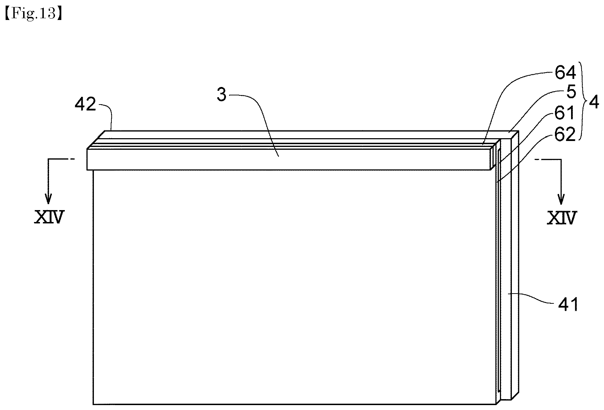

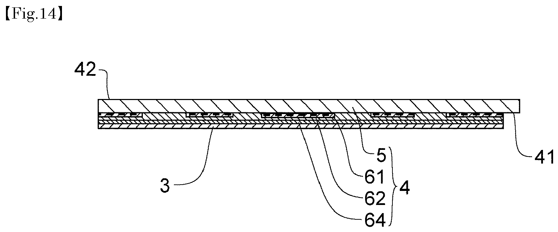

As illustrated in FIGS. 13 and 14, in the label base 4 constituting the heat-shrinkable tubular label 1 according to a second modification of the first embodiment, an optional partial print layer 64 containing the ultraviolet-absorbing heating agent is provided at part of the back surface side of the heat-shrinkable film 5, and the heat-sensitive adhesive layer 3 is provided over the partial print layer 64.

Specifically, similarly to the first embodiment, for example, the label base 4 includes the heat-shrinkable film 5, the design print layer 61, and the slipping layer 62, and the partial print layer 64 containing the ultraviolet-absorbing heating agent is provided at part of the back surface of the slipping layer 62. Ultraviolet-absorbing heating agent is not substantially contained in any of the heat-shrinkable film 5, the design print layer 61, and the slipping layer 62. In other words, ultraviolet-absorbing heating agent is not contained in any of the heat-shrinkable film 5, the design print layer 61, and the slipping layer 62, or the ultraviolet-absorbing heating agent of an amount enough to activate the heat-sensitive adhesive layer 3 is not contained in any of the heat-shrinkable film 5, the design print layer 61, and the slipping layer 62.

The partial print layer 64 may be transparent or opaque as long as the partial print layer 64 contains the ultraviolet-absorbing heating agent. The amount of the ultraviolet-absorbing heating agent included in the partial print layer 64 is, for example, substantially equivalent to the amount of the ultraviolet-absorbing heating agent contained in the slipping layer 62, which is indicated in the first embodiment.

The heat-sensitive adhesive layer 3 is provided on the back surface of the partial print layer 64.

Similarly to the first embodiment, the label base 4 provided with the heat-sensitive adhesive layer 3 is formed in a tubular shape to produce the tubular body 2, and accordingly, the heat-shrinkable tubular label 1 is achieved.

Similarly to the first embodiment, the heat-shrinkable tubular label 1 according to the second modification is applied onto an adherend and irradiated with ultraviolet light to generate heat at the heat generation part (partial print layer 64) so that the heat-sensitive adhesive layer 3 is activated. However, since the partial print layer 64 does not exist on the entire surface of the tubular body 2, heating means other than ultraviolet light, such as steam or heated air, is also used to shrink the heat-shrinkable tubular label 1 by heat. In this case, (1) the heat-shrinkable tubular label 1 may be subjected to heating means such as steam and shrunk by heat after the heat-sensitive adhesive layer 3 is activated through ultraviolet irradiation, (2) the heat-shrinking tubular label 1 may be subjected to heating means such as ultraviolet light and steam may be simultaneously applied, or (3) the heat-sensitive adhesive layer 3 may be activated through ultraviolet irradiation after the heat-shrinkable tubular label 1 is subjected to heating means such as steam and shrunk by heat.

In this manner, the package 10 similar to that of the first embodiment can be obtained.

In the second modification, the heat-shrinkable tubular label 1 having the ultraviolet-absorbing heating agent contained only in the heat-sensitive adhesive layer 3 may be used. In this case, ultraviolet-absorbing heating agent is not substantially contained in the label base 4. In other words, ultraviolet-absorbing heating agent is not contained in the label base 4, or the ultraviolet-absorbing heating agent of an amount enough to activate the heat-sensitive adhesive layer 3 is not contained in the label base 4.

The package 10 can be obtained from the heat-shrinkable tubular label 1 having the ultraviolet-absorbing heating agent contained only in the heat-sensitive adhesive layer 3, by using both of ultraviolet irradiation and heating means other than ultraviolet light, such as steam or heated air.

**Third modification of first embodiment**

The first embodiment and the first and second modifications mainly describe the heat-shrinkable tubular label having the heat-sensitive adhesive layer provided in an annular band shape at the end part of the tubular body in the longitudinal direction, but the present invention is not limited thereto. For example, the heat-sensitive adhesive layer may be provided in an annular band shape at each of both end parts of the tubular body in the longitudinal direction, or the heat-sensitive adhesive layer may be provided in an annular band shape at a middle part of the tubular body in the longitudinal direction, or the heat-sensitive adhesive layer may be provided in a strip shape extending in the longitudinal direction of the tubular body, or the heat-sensitive adhesive layer may be disposed as disclosed in Patent Literature 1 (none of these configurations are illustrated).

According to the present invention, the heat-sensitive adhesive layer can be formed at a desired position.

**Fourth modification of first embodiment**

A well-known perforation line may be formed in the heat-shrinkable tubular label 1 according to the first embodiment.

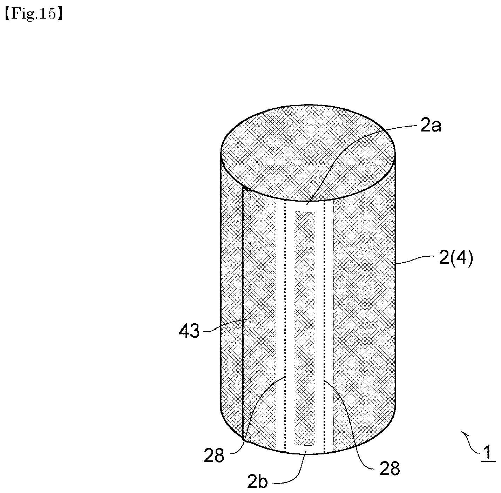

For example, as illustrated in FIG. 15, a perforation line 28 extending in the longitudinal direction is formed in the heat-shrinkable tubular label 1. A plurality (for example, two) of the perforation lines 28 are formed at intervals in the circumferential direction. A perforation line is a plurality of small holes periodically formed in the tubular body and linearly arranged.

Similarly to the first embodiment, the heat-shrinkable tubular label 1 includes the tubular body 2 which is shrinkable by heat at least in the circumferential direction, and the heat-sensitive adhesive layer provided on at least part of the inner surface of the tubular body 2. However, in FIG. 15, the heat-sensitive adhesive layer is not illustrated. The ultraviolet-absorbing heating agent is contained in at least either one of the heat-sensitive adhesive layer and a region of the tubular body 2 in which at least the heat-sensitive adhesive layer is provided. That is, the heat generation part (part containing the ultraviolet-absorbing heating agent) is provided partially or entirely in the tubular body 2.

In particular, in the heat-shrinkable tubular label 1 having the perforation line 28 formed as in a fourth modification, the heat generation part is preferably provided in the tubular body 2 except for a surrounding region of each perforation line 28. In FIG. 15, a place corresponding to the heat generation part is hatched to illustrate the heat generation part in an easily understandable manner. As illustrated in FIG. 15, the heat generation part is more preferably provided in the tubular body 2 in the surrounding region of each perforation line 28 and upper and lower end parts of the tubular body 2 except for an upper end part 2a and a lower end part 2b between the two perforation lines 28, 28. The surrounding region of each perforation line is, for example, a region extending from the perforation line by 10 mm or less on one side and by 10 mm or less on the other side in the circumferential direction, and preferably a region extending from the perforation line by 7 mm or less on one side and by 7 mm or less on the other side in the circumferential direction.

When the heat-shrinkable tubular label 1 according to the fourth modification is irradiated with ultraviolet light, the heat generation part generates heat, and the heat-shrinkable tubular label 1 is shrunk by heat substantially entirely except for the surrounding region of each perforation line (because the surrounding region of each perforation line 28 includes no heat generation part). Thus, since the surrounding region of each perforation line 28 is not shrunk by heat, the holes of the perforation line can be prevented from largely expanding. When no heat generation part is included in the upper end part 2a and the lower end part 2b between the perforation lines 28, 28, the upper end part 2a and the lower end part 2b are not shrunk by heat. Accordingly, in the heat-shrinkable tubular label after ultraviolet irradiation, the upper end part 2a and the lower end part 2b expand outward and lift up. Thus, the upper end part 2a and the lower end part 2b can be easily held with fingers to easily divide the heat-shrinkable tubular label by using the perforation lines 28.

**Second embodiment**

The second embodiment relates to a production process using a contractive adhesion label made of a label base in a sheet shape.

<Outlines of non-heat-shrinkable sheet label, label base and heat-sensitive adhesive layer>

In a first example of the second embodiment, a non-heat-shrinkable sheet label 17 made of a non-heat-shrinkable label base 47 in a sheet shape is used.

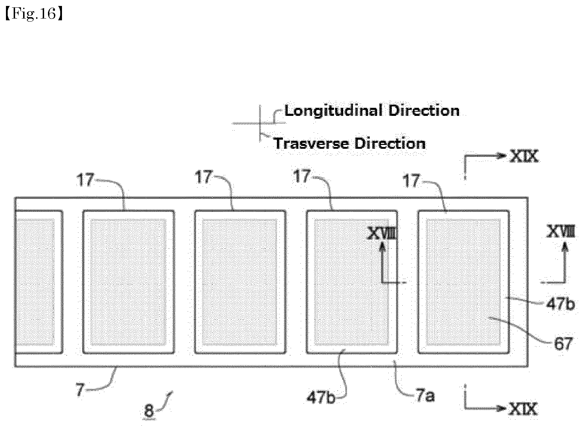

In FIGS. 16 to 19, the non-heat-shrinkable sheet label 17 includes the label base 47 in a sheet shape and a heat-sensitive adhesive layer 37 made of a heat-sensitive adhesive agent. The ultraviolet-absorbing heating agent is contained in at least either one of the heat-sensitive adhesive layer 37 and a region of the label base 47 having at least the provided heat-sensitive adhesive layer 37 . The heat-sensitive adhesive layer 37 is provided on the back surface of the label base 47. The label base 47 is substantially not shrinkable by heat, in other words, non-heat-shrinkable label base.

Normally, the non-heat-shrinkable sheet label 17 is provided in a state in which a back surface 37a of the heat-sensitive adhesive layer 37 is attached in contact with a release surface 7a of a release film 7. The non-heat-shrinkable sheet label 17 is preferably supplied as a continuous body 8 having a plurality of non-heat-shrinkable sheet labels 17 each independently attached on the release surface 7a of the release film 7 having an elongated strip shape. The continuous body 8 includes the elongated strip-shaped release film 7, and the plurality of non-heat-shrinkable sheet labels 17 arranged and attached on the release film 7.

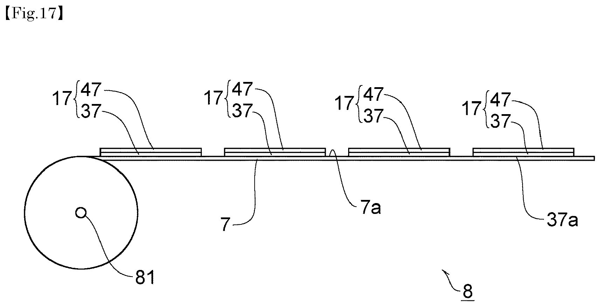

As illustrated in FIG. 17, the continuous body 8 is normally stored and transported while being wound in a roll shape. In this case, the continuous body 8 may be wound with the non-heat-shrinkable sheet label 17 positioned on the outer side, or may be wound with the non-heat-shrinkable sheet label 17 positioned on the inner side. In the illustrated example, the continuous body 8 is wound around a core 81 with the non-heat-shrinkable sheet label 17 positioned on the outer side.

The release film 7 has an elongated strip shape. In this description, an elongated strip shape is a substantially rectangular shape in which a first length in one direction is more than 10 times larger than a second length in a direction orthogonal to the one direction, preferably the first length is more than 30 times larger than the second length, and more preferably the first length is more than 100 times larger than the second length.

In the continuous body 8, the non-heat-shrinkable sheet label 17 is arranged and attached on the release film 7 while the back surface 37a of the heat-sensitive adhesive layer 37 weakly adheres to the release surface 7a of the release film 7.

The adhesion strength of the heat-sensitive adhesive layer 37 of the non-heat-shrinkable sheet label 17 to the release surface 7a of the release film 7 is not particularly limited as long as the non-heat-shrinkable sheet label 17 is not peeled off when the continuous body 8 is wound in a roll shape, and the non-heat-shrinkable sheet label 17 can be easily peeled off as needed. For example, the adhesion strength of the heat-sensitive adhesive layer 37 to the release film 7 is 0.05 N/15mm to 0.7 N/15mm, and preferably 0.1 N/15mm to 0.5 N/15mm. The adhesion strength is a value measured by a method compliant with 180° peeling of JIS Z 0237. Specifically, the adhesion strength is a maximum intensity when a sample is produced by cutting out the label base attached to the release surface of the release film through the heat-sensitive adhesive layer into the size of the longitudinal length $\times$ the lateral length = 100 mm $\times$ 15 mm, and this sample label base is peeled at the temperature of 23±2°C, the humidity of 50±5%RH, and the speed of 300 mm/minute.

In the non-heat-shrinkable sheet label 17, the adhesion strength between the back surface of the label base 47 and the front surface of the heat-sensitive adhesive layer 37 is extremely large so that it is difficult to separate the label base 47 and the heat-sensitive adhesive layer 37.

The release film 7 is made of a film including a front surface having a small wettability.

In the illustrated example, the release film 7 includes a base film 71 and a release layer 72 laminated on the entire front surface of the base film 71. The release layer 72 is formed in a solid state on the entire front surface of the base film 71. The front surface of the release layer 72 is the release surface 7a of the release film 7.

Typically, the release layer 72 can be formed by, for example, applying a peeling agent containing silicone resin to the front surface of the base film 71.

The base film 71 is not particularly limited, but is, for example, a synthesis resin film made of polyester based resin, polystyrene based resin, vinyl-chloride based resin, or the like; a laminated resin film having a plurality of resin layers of different kinds or the same kind are laminated; synthetic paper; paper such as standard paper and high-quality paper; or a laminated film having two or more kinds of films selected from among these laminated films. The base film 71 is preferably a synthesis resin film or a laminated resin film. When a synthesis resin film or a laminated resin film is used, the heat-sensitive adhesive layer 37 in contact with the release film 7 is in a mirrored state, preventing cloudiness of the non-heat-shrinkable sheet label 17 attributable to unevenness of the heat-sensitive adhesive layer 37.

The base film 71 may have a normal mechanical strength, and the thickness thereof is not particularly limited, but is, for example, 30 $\mu$m to 300 $\mu$m. The thickness of the release layer 72 is not particularly limited, but is, for example, approximately 0.1 $\mu$m to 3 $\mu$m. The base film 71 may be transparent or opaque.

The release layer 72 may be omitted when the base film 71 having a small wettability (the base film 71 having an excellent release property) is used. In this case, the front surface of the base film 71 is the release surface 7a of the release film 7.

A plurality of the non-heat-shrinkable sheet labels 17 are attached side by side at a desired interval in the longitudinal direction of the elongated strip-shaped release film 7 or with edge parts thereof in contact with each other. In the illustrated example, the non-heat-shrinkable sheet labels 17 adjacent to each other in the longitudinal direction are disposed at a desired interval. Since the non-heat-shrinkable sheet labels 17 are disposed at the interval, the individual non-heat-shrinkable sheet labels 17 can be independently peeled when each release film 7 is inverted at a peeling unit to be described later.

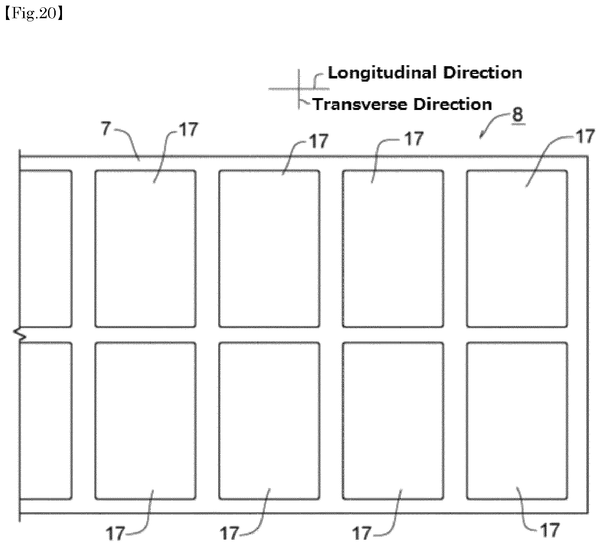

FIG. 16 exemplarily illustrates the continuous body 8 having the non-heat-shrinkable sheet labels 17 disposed in a single row in the transverse direction of each release film 7. However, for example, the non-heat-shrinkable sheet labels 17 may be disposed in two rows in the transverse direction as illustrated in FIG. 20, or may be disposed in three or more rows the transverse direction although not particularly illustrated.

The plan view shape of each non-heat-shrinkable sheet label 17 is not particularly limited, but is determined as appropriate with design and the like taken into account. Examples of the plan view shape of the non-heat-shrinkable sheet label 17 (label base 47) include, in addition to a substantially rectangular shape in plan view as illustrated in FIG. 16, substantially polygonal shapes such as a substantially triangular shape and a substantially hexagonal shape, a substantially circular shape, and a substantially elliptical shape, although not illustrated.

In the present invention, "substantially" used herein means a range allowed in a technical field to which the present invention belongs.

The term "substantially" for the shape means a shape allowed in the technical field to which the present invention belongs. The term "substantially" for polygonal shapes such as a substantially rectangular shape and a substantially triangular shape include, for example, a shape with chamfered corners, a shape with slightly expanded or recessed part of a side, and a shape with a slightly curved side. When corners are chamfered, the corner of any angulated part is removed, and the remaining part is formed in an arc shape or a gradual obtuse angled shape. The term "substantially" for a substantially circular shape and a substantially elliptical shape includes, for example, a shape with slightly expanded or recessed part of the circumference, and a shape with part of the circumference slightly formed in a straight line shape or a slanting line shape.

The non-heat-shrinkable sheet label 17 includes the label base 47 in a sheet shape and the heat-sensitive adhesive layer 37. The label base 47 includes a non-heat-shrinkable film 57 and a print layer 67 (design print layer) on which a design is shown, and may include any other print layer as necessary. The other print layer is, for example, a protective layer as exemplarily illustrated in the first embodiment.

The ultraviolet-absorbing heating agent is contained in at least one of a region in which the heat-sensitive adhesive layer 37 is provided and the heat-sensitive adhesive layer 37. In other words, (a) the ultraviolet-absorbing heating agent is contained in the heat-sensitive adhesive layer 37, (b) the ultraviolet-absorbing heating agent is contained in a region of the label base 47 in which at least the heat-sensitive adhesive layer 37 is provided, or (c) the ultraviolet-absorbing heating agent is contained in both of the heat-sensitive adhesive layer 37 and the region in which at least the heat-sensitive adhesive layer 37 is provided.

<Non-heat-shrinkable film>

The label base 47 according to the present embodiment includes a flexible film (non-heat-shrinkable film) that is substantially not shrinkable by heat. The non-heat-shrinkable film is not particularly limited, but may be a film selected from among a synthesis resin film, paper, synthetic paper, a foamed resin film, non-woven fabric and the like, which are not shrinkable by heat. In addition, the non-heat-shrinkable film may be a film having a barrier layer (gas-barrier and/or light-shielding layer) is provided on the film such as a synthesis resin film, a film provided with another functional layer such as a vapor deposited layer, a heat insulating layer or an antibacterial layer, or a laminated body having two or more kinds of these laminated films. The materials of the synthesis resin film and the foamed resin film are each, for example, one kind of thermoplastic resin such as: polyolefin based resin such as polypropylene, low-density polyethylene, linear low-density polyethylene, intermediate-density polyethylene, and ethylene-cyclic olefin copolymer; polyester based resin such as polyethylene terephthalate and polylactic acid; vinyl halide based resin such as polyvinyl chloride; polyamide based resin such as 6,6 nylon; and polystyrene based resin such as polystyrene and ABS, and a mixture of these resins. The synthesis resin film is preferably a biaxially stretched polyethylene terephthalate resin film, in particular.

The non-heat-shrinkable film may be transparent or opaque. The non-heat-shrinkable film 57 is preferably transparent to obtain a package with good appearance. Such a transparent non-heat-shrinkable film is, for example, a synthesis resin film as described above.

The thickness of the non-heat-shrinkable film used for the label base in a sheet shape is not particularly limited, but is, for example, 10 $\mu$m to 100 $\mu$m, preferably 15 $\mu$m to 60 $\mu$m, and more preferably 20 $\mu$m to 50 $\mu$m. A non-heat-shrinkable sheet label made of the label base having such a thickness is typically thin and difficult to handle. However, in the present invention, since such a non-heat-shrinkable sheet label is attached to a release film, a problem such as curl attributable to, for example, the thickness of the label base does not occur.

<Print layer such as design print layer>

The design print layer 67 is same as that described in the first embodiment. The design print layer according to the present embodiment may include a base print layer.

The design print layer 67 is provided on the front or back surface of the non-heat-shrinkable film 57, or provided on the front and back surfaces of the non-heat-shrinkable film 57. The design print layer 67 is preferably provided on the front surface of the non-heat-shrinkable film 57 as in the illustrated example.

The design print layer 67 may be provided on the entire front surface (or back surface) of the non-heat-shrinkable film 57, or may be provided on a partial region thereof. In the illustrated example, the design print layer 67 is provided on the transparent non-heat-shrinkable film 57 except for a peripheral part, and thus a peripheral part 47b of the label base 47 is a region not including the design print layer 67. In FIG. 16, for the sake of simplicity, numerous dots are drawn in a range in which the design print layer 67 is provided.

When the design print layer 67 is provided on the front surface of the non-heat-shrinkable film 57, a transparent protective layer (not illustrated) may be provided at least on the front surface of the design print layer 67 to protect the print layer. The protective layer is, for example, the one described in the first embodiment.

<Heat-sensitive adhesive layer>

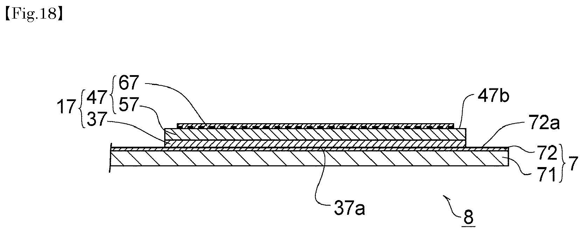

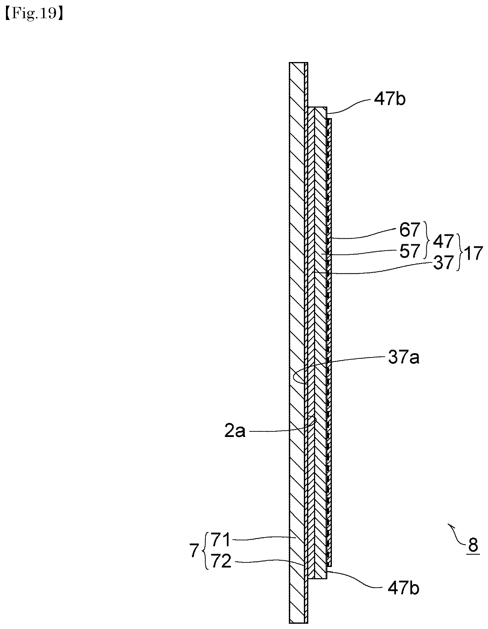

The heat-sensitive adhesive layer 37 is an adhesive layer provided to bond the non-heat-shrinkable sheet label 17 to an adherend. The heat-sensitive adhesive layer 37 is provided in a desired range on the back surface of the label base 47. In the illustrated example, the heat-sensitive adhesive layer 37 is provided in a solid state across the entire back surface of the label base 47 as illustrated in FIGS. 18 and 19. However, the heat-sensitive adhesive layer 37 may be provided in a solid state at part of the back surface of the label base 47 (not illustrated). The heat-sensitive adhesive layer 37 is normally provided in a solid state in a desired range as described above, and may be provided in mesh or numerous dots in the range (not illustrated).

The heat-sensitive adhesive layer 37 may be transparent or opaque, but is normally colorless transparent.

The heat-sensitive adhesive layer 37 is provided on the back surface of the label base 47 by printing or coating a heat-sensitive adhesive agent.

Examples of the heat-sensitive adhesive agent used in an adhesion label in a sheet shape according to the present embodiment include a delayed tack type heat-sensitive adhesive agent, an emulsion type heat-sensitive adhesive agent, a solvent type heat-sensitive adhesive agent and a hot-melt type adhesive agent, as described in the first embodiment.

The activation temperature of the heat-sensitive adhesive agent (heat-sensitive adhesive layer) is not particularly limited, but may have a lower limit value of 30°C, for example.

In the present embodiment, for example, a delayed tack type heat-sensitive adhesive agent having an activation temperature of 40°C to 80°C (preferably 50°C to 65°C) may be used. Alternatively, an emulsion type heat-sensitive adhesive agent or solvent type heat-sensitive adhesive agent having an activation temperature of 40°C to 80°C (preferably 50°C to 65°C) may be used. Alternatively, a hot-melt type adhesive agent having an activation temperature of 30°C to 50°C (preferably 30°C to 40°C) may be used.

Alternatively, a heat-sensitive adhesive agent as disclosed in JP 2014-71369 A may be used.

When simply described, this heat-sensitive adhesive agent is a heat-sensitive adhesive agent having an activation temperature of 60°C to 110°C, preferably 60°C to 90°C, and more preferably 60°C to 70°C. A non-heat-shrinkable sheet label including a heat-sensitive adhesive layer made of the heat-sensitive adhesive agent that activates at such a temperature can be suitably used to produce an in-mold molded product by various molding methods. In particular, the heat-sensitive adhesive agent is preferably transparent. Examples of such a heat-sensitive adhesive agent include mixture of base resin such as ethylene-vinyl acetate copolymer (EVA), ethylene-acrylic acid ester copolymer, ethylene-methacrylic acid ester copolymer or thermoplastic elastomer (thermoplastic elastomer such as synthetic rubber based thermoplastic elastomer, olefin based thermoplastic elastomer such as ethylene-$\alpha$olefin and urethane based thermoplastic elastomer) with tackifier such as oil based tackifier, terpene based tackifier, terpene phenol based tackifier or chromane-indene based tackifier, and additive such as wax or lubricant. Examples of the wax include higher fatty acid based wax and polyethylene based wax, and examples of the lubricant include amide based lubricant. For example, the base resin may be of one kind alone or of two or more kinds. The base resin of the heat-sensitive adhesive agent preferably contains ethylene based copolymer and olefin based elastomer, and more preferably contains ethylene-vinyl acetate copolymer and olefin based elastomer. Such a heat-sensitive adhesive agent is activated at a relatively low temperature. When the base resin contains ethylene based copolymer (preferably ethylene-vinyl acetate copolymer) and olefin based elastomer, the content ratio thereof is not particularly limited. The contained amount of ethylene based copolymer in the heat-sensitive adhesive agent is, for example, 20 mass% to 60 mass%, and preferably 25 mass% to 55 mass%. The contained amount of olefin based elastomer in the heat-sensitive adhesive agent is, for example, 10 mass% to 50 mass%, and preferably 15 mass% to 45 mass%. The contained amount of tackifier in the heat-sensitive adhesive agent is, for example, 1 mass% to 40 mass%, and preferably 5 mass% to 35 mass%. The heat-sensitive adhesive agent preferably contains ethylene based copolymer (preferably ethylene-vinyl acetate copolymer) and olefin based elastomer as the base resin.

The thickness of the heat-sensitive adhesive layer 37 is not particularly limited, but is normally approximately 3 $\mu$m to 30 $\mu$m.

For solid adhesion between the back surface of the label base 47 and the heat-sensitive adhesive layer 37, a well-known anchor coat layer (not illustrated) may be provided on the back surface of the label base 47, and the heat-sensitive adhesive layer 37 may be provided on the back surface of the anchor coat layer.

The back surface 37a of the heat-sensitive adhesive layer 37 and the release surface 7a of the release film 7 are preferably as smooth as possible. When the back surface 37a of the heat-sensitive adhesive layer 37 is smooth, cloudiness of the non-heat-shrinkable sheet label 17 can be prevented.

A ten-point average roughness Rz of the back surface of the heat-sensitive adhesive layer is preferably equal to or smaller than 3 $\mu$m, more preferably equal to or smaller than 2 $\mu$m, and still more preferably equal to or smaller than 1 $\mu$m. A package that is unlikely to suffer cloudiness and has preferable appearance can be obtained by using the non-heat-shrinkable sheet label including such a heat-sensitive adhesive layer. The lower limit value of the ten-point average roughness Rz of the back surface of the heat-sensitive adhesive layer is zero in theory, but exceeds zero in reality.

In this description, the ten-point average roughness Rz is a value measured by a method compliant with JIS B 0601-1994. Specifically, for example, the ten-point average roughness Rz is measured through measurement at an optional place on the surface of a sample by a surface scanning method compliant with JIS B 0601-1994 by using a surface roughness measurement machine ("Handy Surf E-35A" manufactured by TOKYO SEIMITSU CO., LTD.).

The non-heat-shrinkable sheet label 17 includes a transparent part (part that is transparent). The transparent part is made of part of the transparent label base 47, in which the transparency thereof is substantially maintained. The transparent part is, for example, (1) a region of the transparent label base 47 provided with the transparent heat-sensitive adhesive layer 37, in which opaque print layer is not provided (in the illustrated example, the transparent part is the peripheral part 47b of the label base 47), or (2) a region of the transparent label base 47 provided with the transparent heat-sensitive adhesive layer 37, in which any other opaque layer is not provided.

The transparent part of the non-heat-shrinkable sheet label 17 may be colorless transparent or colored transparent, and is preferably colorless transparent. The whole light transmissivity of the transparent part of the non-heat-shrinkable sheet label 17 is, for example, equal to or higher than 70%, preferably equal to or higher than 80%, and more preferably equal to or higher than 90%.

<Ultraviolet-absorbing heating agent>

The ultraviolet-absorbing heating agent is contained in at least either one of the label base 47 and the heat-sensitive adhesive layer 37.

The ultraviolet-absorbing heating agent is, for example, the one described in the first embodiment.

The ultraviolet-absorbing heating agent is contained in, for example, the heat-sensitive adhesive layer. Alternatively, the ultraviolet-absorbing heating agent is contained in the non-heat-shrinkable film. Alternatively, the ultraviolet-absorbing heating agent is contained in the print layer such as a design print layer. Alternatively, the ultraviolet-absorbing heating agent is contained in at least two selected from among the heat-sensitive adhesive layer, the non-heat-shrinkable film and the print layer such as a design print layer. The ultraviolet-absorbing heating agent is preferably contained in the heat-sensitive adhesive layer and/or the print layer such as a design print layer, and more preferably contained in the heat-sensitive adhesive layer.

The amount of the ultraviolet-absorbing heating agent is not particularly limited. A larger amount of heat is generated as a larger amount of the ultraviolet-absorbing heating agent is contained. However, when the amount is too large, the amount of any other component is relatively reduced so that the functionalities of the film and the print layer may not be maintained.

For this reason, the amount of the ultraviolet-absorbing heating agent contained in the heat-sensitive adhesive layer is 0.5 wt% to 10 wt%, and preferably 0.5 wt% to 8 wt%, based on 100 wt% of the entire heat-sensitive adhesive layer.

The amount of the ultraviolet-absorbing heating agent in the design print layer is 0.5 wt% to 10 wt%, and preferably 0.5 wt% to 8 wt%, based on 100 wt% of the entire design print layer.

The amount of the ultraviolet-absorbing heating agent contained in the non-heat-shrinkable film is 0.5 wt% to 40 wt%, and preferably 1 wt% to 30 wt%, based on 100 wt% of the entire film.

<Step of preparing non-heat-shrinkable sheet label>

The non-heat-shrinkable sheet labels 17 are normally provided as the continuous body 8 attached on the release film 7 as illustrated in FIGS. 16 to 19.

The process of producing the continuous body includes: the step of interposing a melted heat-sensitive adhesive agent between an elongated strip-shaped release film and an elongated strip-shaped film webto obtain a laminated body having the release film, a heat-sensitive adhesive layer made of the heat-sensitive adhesive agent and the film webare in this order; and the step of partitioning the film web into a plurality of labels in the longitudinal direction by disconnecting a web of the label base 47 in the thickness direction. The production process may include, as necessary, the step of removing any unnecessary part of the film web.

The elongated strip-shaped release film may be the one described above, but is preferably a release film having the ten-point average roughness Rz of the release surface of equal to or smaller than 3 μm. When such a release film is used, a non-heat-shrinkable sheet label including a heat-sensitive adhesive layer having excellent smoothness on the back surface as described above can be easily formed.

The release film 7 having the ten-point average roughness Rz of the release surface equal to or smaller than 3 μm can be obtained by applying a peeling agent on the front surface of an elongated strip-shaped base film by using a gravure coater or the like so that a release layer having a thickness of 0.1 μm to 3 μm is obtained.

The material of the elongated strip-shaped film web may be those exemplarily described above for the non-heat-shrinkable film. The length of the elongated strip-shaped film web in the transverse direction is preferably equal to the length of the release film in the transverse direction.

The design print layer, the protective layer and the like described above are provided on the elongated strip-shaped film web at desired intervals in the longitudinal direction thereof. In addition, an anchor coat layer is provided in a solid state on the back surface of the film web as necessary.

The elongated strip-shaped release film and the elongated strip-shaped film web are each stored and transported while being wound in a roll shape.

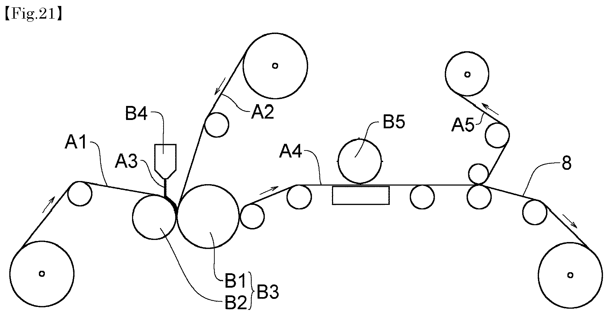

FIG. 21 is a pattern diagram illustrating the step of producing a continuous body of non-heat-shrinkable sheet labels.

As illustrated in FIG. 21, an elongated strip-shaped release film A1 and an elongated strip-shaped film web A2 are each independently conveyed toward one side in the longitudinal direction. The conveyance direction is illustrated with arrows.

During the conveyance, the release film A1 and the film web A2 are adhered to each other by pressing with a melted heat-sensitive adhesive agent A3 interposed between the release surface of the release film A1 and the back surface of the film web A2. Specifically, as illustrated in FIG. 21, the release film A1 and the film web A2 pass through a press bonding roll B3 including a main roll B1 and a sub roll B2 so that the release surface of the release film A1 and the back surface of the film web A2 face each other. The melted heat-sensitive adhesive agent A3 is placed on the release surface of the release film A1 or the back surface of the film web A2 immediately before the release film A1 and the film web A2 are passed between the main roll B1 and the sub roll B2. The heat-sensitive adhesive agent A3 is heated and melted by an extruder (not illustrated), and pushed out of a dye B4 as a film across the release film A1 entirely in the transverse direction (so-called sand laminate). The temperature of heating of the heat-sensitive adhesive agent is equal to or higher than the activation temperature of the heat-sensitive adhesive agent, and is set as appropriate in accordance with the kind of the heat-sensitive adhesive agent.

A cooling device (not illustrated) is provided to at least either one of the main roll B1 and the sub roll B2. The melted heat-sensitive adhesive agent A3 is cooled while passing through the press bonding roll B3, and the heat-sensitive adhesive layer is formed between the release surface of the release film A1 and the back surface of the film web A2. In this manner, an elongated strip-shaped laminated body A4 having the release film / the heat-sensitive adhesive layer / the film web laminated in this order is obtained.

After the laminated body A4 is obtained, the laminated body A4 may be temporarily wound in a roll shape and then pulled out of this roll to perform a subsequent disconnection process, or as illustrated in FIG. 21, the subsequent disconnection process may be performed continuously after the laminated body A4 is obtained.

The film web A2 of the laminated body A4 is disconnected in the thickness direction to partition the plane of the film web A2 into a plurality of non-heat-shrinkable sheet labels arranged in the longitudinal direction. The plurality of non-heat-shrinkable sheet labels can be formed by cutting the plane of the film webA2 into a shape that matches with the shape of each non-heat-shrinkable sheet label in plan view. The disconnection can be performed by using, for example, a dye roll B5.

Only the film web A2 may be disconnected without disconnecting the release film A1, or the film web A2 may be disconnected together with the heat-sensitive adhesive layer. Since the heat-sensitive adhesive layer is fragile, an unnecessary part to be described later can be removed even when only the film webA2 is disconnected.

An unnecessary part A5 of the film web A2 except for the non-heat-shrinkable sheet labels partitioned in the disconnection step is removed from the release film A1 and collected. At this time, the unnecessary part A5 is peeled between the heat-sensitive adhesive layer adhered on the back surface of the unnecessary part A5 and the release surface of the release film A1, and the unnecessary part A5 together with the heat-sensitive adhesive layer are removed from the release film A1.

In this manner, the continuous body 8 is obtained, which has the plurality of non-heat-shrinkable sheet labels 17 are attached to the release film 7 at a desired interval as illustrated in FIGS. 16 to 19. The obtained continuous body 8 is wound in a roll shape.

<Step of applying non-heat-shrinkable sheet label>

A continuous body wound in a roll shape is pulled out, and a non-heat-shrinkable sheet label is peeled from the continuous body and applied onto an adherend such as a container, and accordingly, a package is obtained.

The adherend is not particularly limited, but may be various adherends described in the first embodiment.

An adhesive label in a sheet shape may be used as an in-mold label. The in-mold label is a label applied onto a container simultaneously with molding of the container. Examples of a molding method include a well-known molding method such as injection molding, blow molding, differential pressure molding, compression molding or foamed molding.

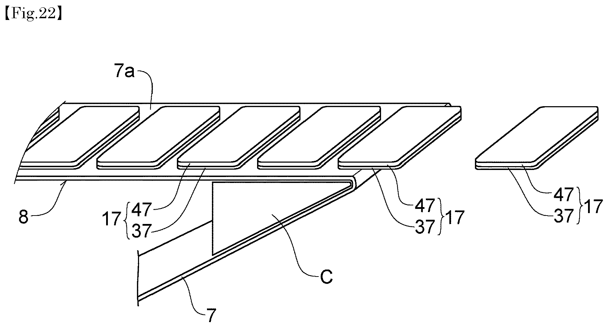

As illustrated in FIG. 22, the continuous body 8 is fed in the longitudinal direction by using a conveyance device, and the release film 7 is inverted at a peeling unit C in the midway so that each non-heat-shrinkable sheet label 17 is peeled off from the release surface 7a of the release film 7. When the continuous body 8 is fed to the peeling unit C at a constant speed, the each non-heat-shrinkable sheet labels 17 can be removed from the release film 7 at a constant time interval. For example, when a sensor or the like is used to determine the boundary between the transparent part and the design print layer of the non-heat-shrinkable sheet label 17, the non-heat-shrinkable sheet labels 17 can be removed at a desired interval while adjusting the timing of feeding the continuous body 8.

In the continuous body 8, since the non-heat-shrinkable sheet labels 17 are attached to the release film 7, the non-heat-shrinkable sheet labels 17 do not cause blocking to each other. Since the plurality of non-heat-shrinkable sheet labels 17 are arranged in the longitudinal direction of the release film 7 and attached to the release film 7 in a peelable manner, the non-heat-shrinkable sheet labels 17 can be easily taken out of the continuous body 8 one by one when used. In particular, when the adhesion strength of the heat-sensitive adhesive layer of each non-heat-shrinkable sheet label to the release surface of the release film is in the above-described range (0.05 N/15mm to 0.7 N/15mm), the non-heat-shrinkable sheet label 17 can be reliably peeled off from the release film 7.

Each non-heat-shrinkable sheet label 17 peeled off from the release film 7 is irradiated with ultraviolet light by an ultraviolet irradiation device (not illustrated).

The ultraviolet irradiation device is not limited to a particular light source, but may include, for example, an ultraviolet LED, an ultraviolet lamp (with electrodes or without electrodes) or an ultraviolet laser. The ultraviolet irradiation device may be a commercially available product, and is, for example, "FJ300" manufactured by Phoseon Technology.

The peak wavelength of ultraviolet is, for example, 150 nm to 500 nm, preferably 200 nm to 400 nm, more preferably 200 nm to 399 nm, still more preferably 300 nm to 399 nm, and most preferably 350 nm to 399 nm. When ultraviolet light having such a wavelength is used, heat can be generated at the heat generation part by the ultraviolet light without influence on the color of the design print layer.

The irradiation intensity (UV illuminance) of ultraviolet light is not particularly limited, but is preferably equal to or higher than 1000 mW/cm$^2$, and more preferably equal to or higher than 3000 mW/cm$^2$. The upper limit of the irradiation intensity of ultraviolet light is not particularly limited, but is, for example, equal to or lower than 15 W/cm$^2$. The irradiation intensity of ultraviolet light for the non-heat-shrinkable sheet label is preferably 5 W/cm$^2$ to 12 W/cm$^2$, in particular.

The irradiation time of ultraviolet light continues at least until a purpose is achieved. Specifically, the irradiation time of ultraviolet light continues at least until or after the heat-sensitive adhesive layer is activated and adhered to an adherend.

Specifically, a cumulative light quantity of ultraviolet light is preferably equal to or larger than 400 mJ/cm$^2$, and more preferably equal to or larger than 800 mJ/cm$^2$. However, too much ultraviolet irradiation may melt the label base, and thus the upper limit of the cumulative light quantity is preferably, for example, equal to or smaller than 8100 mJ/cm$^2$.

Through ultraviolet irradiation, the heat generation part (such as the design print layer containing the ultraviolet-absorbing heating agent) generates heat. When the heat is transferred to the heat-sensitive adhesive layer, the heat-sensitive adhesive layer is activated and adhered to an adherend.

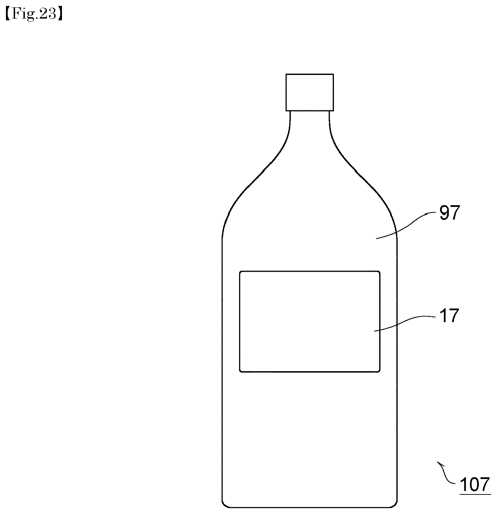

In this manner, as illustrated in FIG. 23, a package 107 is obtained, which has the non-heat-shrinkable sheet label 17 adhered to an adherend 97 such as a container by the heat-sensitive adhesive layer.

The non-heat-shrinkable sheet label 17 according to the present embodiment also achieves effects similar to those of the first embodiment. In the non-heat-shrinkable sheet label 17 according to the present embodiment, since the heat-sensitive adhesive layer 37 is activated by using ultraviolet light, it is relatively inexpensive to activate the heat-sensitive adhesive layer 37, and the heat-sensitive adhesive layer 37 can be heated without applying heat to an adherend. Moreover, thermal energy can be sufficiently supplied to the heat-sensitive adhesive layer 37.

<Outline of heat-shrinkable sheet label>

In a second example of the second embodiment, a heat-shrinkable sheet label made of a heat-shrinkable label base in a sheet shape is used.

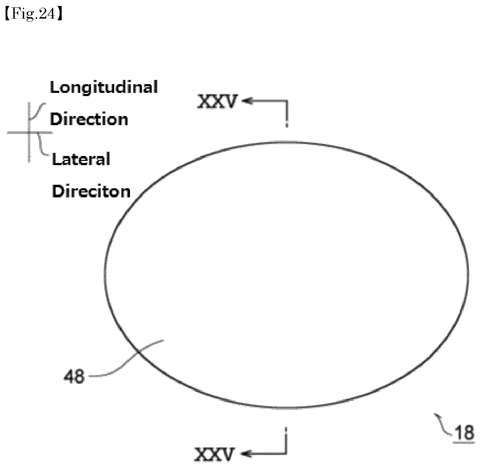

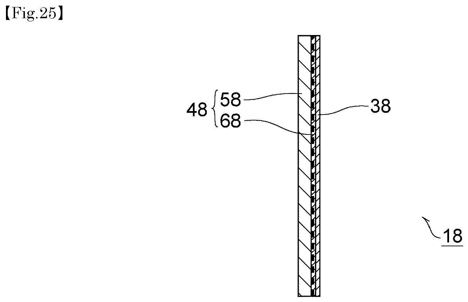

As illustrated in FIGS. 24 and 25, a heat-shrinkable sheet label 18 includes a heat-shrinkable label base 48 in a sheet shape, and a heat-sensitive adhesive layer 38 provided on the back surface of the label base 48. An ultraviolet-absorbing heating agent is contained in at least either one of the heat-sensitive adhesive layer 38 and a region of the label base 48 in which at least the heat-sensitive adhesive layer 38 is provided.

The plan view shape of the label base 48 constituting the heat-shrinkable sheet label 18 is not particularly limited, but is, for example, a substantially polygonal shape such as a substantially rectangular shape, a substantially square shape, a substantially circular shape, a substantially elliptical shape, a substantially triangular shape or a substantially hexagonal shape. In the illustrated example, the label base 48 is formed in a substantially elliptical shape in plan view.

The label base 48 includes a heat-shrinkable film 58 and an optional print layer such as a design print layer 68. The design print layer may include a base print layer.

The heat-shrinkable film 58 used in the heat-shrinkable sheet label 18 may be a heat-shrinkable film similar to that in the first embodiment, but is preferably a film that relatively largely shrinks by heat in both of the lateral direction and the longitudinal direction. For example, the heat-shrinking rate of each of the heat-shrinkable sheet label 18 in the lateral direction and the longitudinal direction is independently equal to or higher than 20%, preferably equal to or higher than 25%, and more preferably equal to or higher than 30%.

The heat-shrinkable sheet label 18 and the non-heat-shrinkable sheet label 17 have the same configuration except for the existence of the heat-shrinking property of the label base.

Thus, description of the configuration of the heat-shrinkable sheet label is made by replacing "non-heat-shrinkable" in the description of the first example of the second embodiment with "heat-shrinkable".

The heat-shrinkable sheet label 18 is applied onto an optional adherend through heat-shrinking. The adherend is not particularly limited. The heat-shrinkable sheet label can be neatly applied onto an adherend having, for example, a three-dimensional stereoscopic shape such as a three-dimensional curved surface, in addition to those having a flat surface, a bent surface and a two-dimensional curved surface.

In producing a package, a heat-shrinkable sheet label is prepared and applied onto an adherend. The heat-shrinkable sheet label is preferably attached to the release surface of a release film and provided as a continuous body, as described in the first example of the second embodiment.

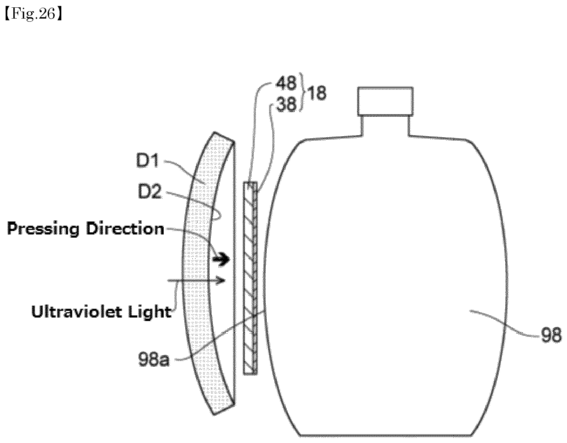

For example, as illustrated in FIG. 26, the heat-shrinkable sheet label 18 is applied onto a container 98 as an adherend having a three-dimensional curved surface 98a. Such a container 98 includes a body part having, for example, a substantially barrel shape. In FIG. 26, the heat-shrinkable film and the like constituting the label base 48 are not illustrated.

The back surface of the heat-shrinkable sheet label 18 (the back surface of the heat-sensitive adhesive layer) is disposed so as to face the outer surface of the container 98. Then, while ultraviolet irradiation is performed, a pressing jig D1 is placed from the front surface side of the heat-shrinkable sheet label 18 to press the heat-shrinkable sheet label 18 against the outer surface of the container 98 including a curved surface 98a. The pressing jig D1 includes a pressing surface D2 having a shape substantially identical to the profile of a part (application part) of the outer surface of the container 98 onto which the label is applied.

When the pressing jig D1 is, for example, a jig D1 formed of a material that transmits ultraviolet light, the heat-shrinkable sheet label 18 can be irradiated with ultraviolet light through the jig D1 from outside the pressing jig D1. However, the pressing jig D1 formed of a material that does not transmit ultraviolet light may be used, and in such a case, the back surface side of the heat-shrinkable sheet label 18 is irradiated with ultraviolet light.

Through ultraviolet irradiation under a condition same as that in the first embodiment, the heat generation part generates heat. Then, the heat-shrinkable sheet label 18 is shrunk by heat, and substantially simultaneously, the heat-sensitive adhesive layer 38 is activated and adhered to the container 98. The heat-shrinkable sheet label 18 being pressed against the outer surface of the container 98 by the pressing surface D2 of the pressing jig D1 deforms along the profile of the application part of the container 98 through heat-shrinking. Thus, creases and the like are unlikely to occur to the heat-shrinkable sheet label 18, and the heat-shrinkable sheet label 18 can be adhered to the outer surface of the container 98 through the heat-sensitive adhesive layer 38.

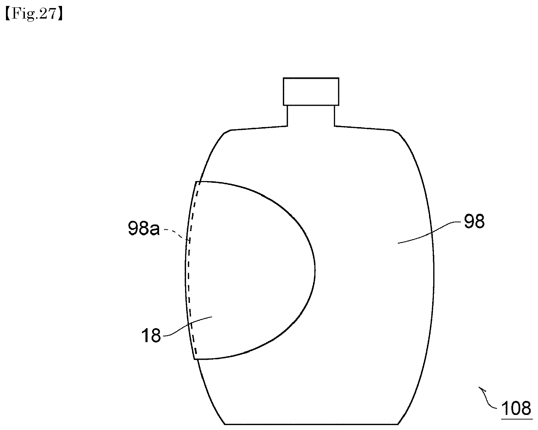

In this manner, as illustrated in FIG. 27, a package 108 is obtained, which has the heat-shrinkable sheet label 18 adhered and applied onto an adherend such as the container 98. In the illustrated example, the heat-shrinkable sheet label 18 is applied onto the three-dimensional curved surface 98a of the container 98. The label 18 is applied in close contact along the three-dimensional curved surface 98a without creases and the like generated at peripheral parts.

The present disclosure also relates to the following exemplifying embodiments.

Embodiment A1: A method for producing a package comprising:

preparing a label that includes a label base and a heat-sensitive adhesive layer provided on a back surface of the label base, and that contains an ultraviolet-absorbing heating agent in at least either one of the heat-sensitive adhesive layer and a region of the label base, in which at least the heat-sensitive adhesive layer is provided;
applying the label onto an adherend; and
activating the heat-sensitive adhesive layer through ultraviolet irradiation.

Embodiment A2: The method for producing a package according to embodiment A1, wherein the label prepared through the preparing is a heat-shrinkable tubular label including a tubular body obtained by forming a heat-shrinkable label base in a tubular shape and the heat-sensitive adhesive layer provided on an inner surface of the tubular body.
Embodiment A3: The method for producing a package according to embodiment A2, wherein the heat-sensitive adhesive layer is entirely provided in a region extending in an annular band shape on the inner surface of the tubular body.
Embodiment A4: The method for producing a package according to embodiment A2 or A3, wherein the ultraviolet-absorbing heating agent is contained across the entire surface of the tubular body.
Embodiment A5: The method for producing a package according to any of embodiments A1-A4, wherein the heat-sensitive adhesive layer has an activation temperature equal to or higher than 30°C.
Embodiment A6: The method for producing a package according to any of embodiments A1-A5, wherein ultraviolet light has a peak wavelength of 200 nm to 399 nm.
Embodiment A7: The method for producing a package according to any of embodiments A1-A6, wherein ultraviolet light has an irradiation intensity equal to or higher than 780 mW/cm$^2$.
Embodiment A8: The method for producing a package according to any of embodiments A1-A7, wherein the ultraviolet-absorbing heating agent is contained in the heat-sensitive adhesive layer.

REFERENCE SIGNS LIST

| | |
|---|---|
| 1 | Heat-shrinkable tubular label |
| 17 | Non-heat-shrinkable sheet label |
| 18 | Heat-shrinkable sheet label |
| 2 | Tubular body |
| 3, 37, 38 | Heat-sensitive adhesive layer |
| 4, 47, 48 | Label base |
| 5, 58 | Heat-shrinkable film |
| 57 | Non-heat-shrinkable film |
| 61, 62, 63, 64, 67, 68 | Print layer |
| 9, 97, 98 | Container (adherend) |

10, 107, 108            Package


**Claims**

**1.** A method for producing a package (10) comprising:

- preparing a label (17) that includes a label base (47) and a heat-sensitive adhesive layer (37) provided on a back surface of the label base (47), and that contains an ultraviolet-absorbing heating agent in at least either one of the heat-sensitive adhesive layer and a region of the label base, in which at least the heat-sensitive adhesive layer (37) is provided,
- applying the label (11) onto an adherend; and
- activating the heat-sensitive adhesive layer (37) through ultraviolet irradiation,

wherein preparing of a label (17) further comprises:

- providing an elongated strip-shaped film web forming the label base (47);
- partitioning the elongated strip-shaped film web into a plurality of labels (17) in the longitudinal direction by disconnecting a web of the label base (47) in the thickness direction;

and wherein activating the heat-sensitive adhesive layer (37) comprises:

- irradiating the ultraviolet-absorbing heating agent for generating heat and transferring the heat to the heat-sensitive adhesive layer (37), thereby adhering the heat-sensitive adhesive layer (37) to the adherend.

**2.** Method of claim 1, comprising:

- laminating a release film (7), the heat-sensitive adhesive layer (37) comprising the heat-sensitive adhesive, and the label base material in this order by melting the release film and the label base material and interposing the heat-sensitive adhesive between them;
- sectioning the label base material into a plurality of labels by cutting the label base material in the thickness direction;
- removing unnecessary portions of the label base material except the plurality of labels from the mold release film and obtaining a continuous body with the plurality of labels attached to the mold release film at predetermined intervals;
- feeding the continuum longitudinally and stripping the label from the release film release surface.

**3.** Method according to claim 1 or 2, comprising:

- providing a laminated body (8) comprising a release film (7), a heat-sensitive adhesive layer (37) made of the heat-sensitive adhesive agent and an elongated strip-shaped film web of label base material;
- partitioning the laminated body into a plurality of labels (17) in the longitudinal direction by disconnecting a web of the label base (47) in the thickness direction.

**4.** Method according to claim 3, wherein providing the laminated body comprises:

- interposing a melted heat-sensitive adhesive agent between an elongated strip-shaped release film (7) and the elongated strip-shaped film web.

**5.** Method according to any of the preceding claims, wherein the elongated strip-shaped film web is formed by a non-heat shrinkable base layer (47).

**6.** Method according to any of the preceding claims, wherein the elongated strip-shaped film web is formed by a heat shrinkable base layer (48).

**7.** Method according to any of claims 3-6, the method further comprising:

- feeding the laminated body (8) in the longitudinal direction to a peeling unit (C);

- peeling the release film (7) of the laminated body (8) at the peeling unit C off from a release surface (7a) of the release film (7).

8. Method as claimed in claim 7, comprising irradiating the label (17) when it has been peeled off from the release film (7).

9. The method for producing a package (10) according to any of the preceding claims, wherein the label prepared through the preparing is a heat-shrinkable tubular label including a tubular body obtained by forming the heat-shrinkable label base (47) in a tubular shape (2) and the heat-sensitive adhesive layer (37) provided on an inner surface of the tubular body (2).

10. The method for producing a package (10) according to any of the preceding claims, wherein the heat-sensitive adhesive layer (37) is entirely provided in a region extending in an annular band shape on the inner surface of the tubular body (2).

11. The method for producing a package (10) according to any of the preceding claims, wherein the ultraviolet-absorbing heating agent is contained across the entire surface of the tubular body (2).

12. The method for producing a package (10) according to any of the preceding claims, wherein the heat-sensitive adhesive layer (37) has an activation temperature equal to or higher than 30□C.

13. The method for producing a package (10) according to any of the preceding claims, wherein ultraviolet light has a peak wavelength of 200 nm to 399 nm.

14. The method for producing a package (10) according to any of the preceding claims, wherein ultraviolet light has an irradiation intensity equal to or higher than 780 mW/cm$^2$.

15. The method for producing a package (10) according to any of the preceding claims, wherein the ultraviolet-absorbing heating agent is further contained in the heat-sensitive adhesive layer (37).

【Fig.1】

Longitudinal Direction

Lateral Direction
(Circumferential Direction)

【Fig.2】

【Fig.3】

Longitudinal Direction

Lateral Direction

【Fig.4】

【Fig.5】

【Fig.6】

【Fig.7】

【Fig.8】

【Fig.9】

【Fig.10】

Longitudinal Direction

Lateral Direction

【Fig.11】

【Fig.12】

【Fig.13】

【Fig.14】

【Fig.15】

【Fig.16】

【Fig.17】

【Fig.18】

【Fig.19】

【Fig.20】

【Fig.21】

【Fig.22】

【Fig.23】

【Fig.24】

**Longitudinal Direction**

**Lateral Direciton**

XXV

XXV

48

18

【Fig.25】

【Fig.26】

Pressing Direction

Ultraviolet Light

48
38 } 18

D1
D2

98a

98

【Fig.27】

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2002 059694 A (GODO PRINTING INK MFG) 26 February 2002 (2002-02-26) * figs.1-3 and relating description * | 1-15 | INV. B29C63/02 |
| A | US 2011/189477 A1 (MIRACLE RONALD L [US] ET AL) 4 August 2011 (2011-08-04) * claim 1 * * paragraphs [0005], [0031] - [0033] * * figures 1-6 * | 1-15 | ADD. B65B53/02 G09F3/04 B29C63/40 B29C63/42 |
| A | JP H11 91027 A (DAINIPPON PRINTING CO LTD) 6 April 1999 (1999-04-06) * the whole document * | 1-15 | |

TECHNICAL FIELDS SEARCHED (IPC)

B29C

The present search report has been drawn up for all claims

| Place of search | Date of completion of the search | Examiner |
|---|---|---|
| Munich | 1 February 2021 | Schneider, Dominik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 20 4743

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2021

| Patent document cited in search report | | Publication date | Patent family member(s) | | Publication date |
|---|---|---|---|---|---|
| JP 2002059694 | A | 26-02-2002 | NONE | | |
| US 2011189477 | A1 | 04-08-2011 | NONE | | |
| JP H1191027 | A | 06-04-1999 | JP | 4184461 B2 | 19-11-2008 |
| | | | JP | H1191027 A | 06-04-1999 |

For more details about this annex : see Official Journal of the European Patent Office, No. 12/82

EPO FORM P0459

**REFERENCES CITED IN THE DESCRIPTION**

**Patent documents cited in the description**

- JP 2002068150 A
- JP 2014071369 A